# EUROPEAN PATENT SPECIFICATION

(11) **EP 4 539 392 B1**
(45) Date of publication and mention of the grant of the patent: **11.11.2026**
(21) Application number: 22958883.5
(22) Date of filing: 13.09.2022
(51) Int. Cl.: H04L 9/40, H04W 4/16

(54) **METHOD AND SYSTEM FOR MAKING OR TAKING MOBILE PHONE CALL**
VERFAHREN UND SYSTEM ZUR HERSTELLUNG ODER AUFNAHME EINES MOBILTELEFONGESPRÄCHS
PROCÉDÉ ET SYSTÈME DE PASSAGE OU DE PRISE D'APPEL DE TÉLÉPHONE MOBILE

(43) Date of publication of application: 16.04.2025
(73) Proprietor: Samsung Electronics Co., Ltd., Suwon-si, Gyeonggi-do 16677 (KR)
(72) Inventor: NGO, Duy Bach, Suwon-si, Gyeonggi-do, 16677 (KR); NGUYEN, Van Thinh, Suwon-si, Gyeonggi-do, 16677 (KR); BUI, Ngoc Minh, Suwon-si, Gyeonggi-do, 16677 (KR)
(74) Representative: Gulde & Partner
(86) International application number: PCT/KR2022/013607
(87) International publication number: WO 2024/058280

(56) References cited:
- WO-A1-2021/262594
- CN-A- 110 493 769
- KR-A- 20160 035 999
- KR-A- 20210 134 931
- KR-B1- 102 284 954
- ANONYMOUS: "encryption - Is it easy to crack a hashed phone number?", CRYPTOGRAPHY STACK EXCHANGE, 1 July 2020 (2020-07-01), pages 1 - 6, XP093283038, Retrieved from the Internet <URL:https://crypto.stackexchange.com/questions/81636/is-it-easy-to-crack-a-hashed-phone-number>
- CHANG QINGQING 2585016434@QQ COM ET AL: "Mobile Phone Number Privacy Scheme Based on Lightweight Hash Mapping", 20191115; 20191115 - 20191117, 15 November 2019 (2019-11-15), pages 34 - 39, XP058450928, ISBN: 978-1-4503-7662-4, DOI: 10.1145/3371676.3371682
- CHANG QINGQING 2585016434@QQ.COM; SU SHENGHUI REESSE@126.COM: "Mobile Phone Number Privacy Scheme Based on Lightweight Hash Mapping", ACMPUB27, NEW YORK, NY, USA, 15 November 2019 (2019-11-15) - 17 November 2019 (2019-11-17), New York, NY, USA , pages 34 - 39, XP058450928, ISBN: 978-1-4503-7662-4, DOI: 10.1145/3371676.3371682

## Description

### Technical Field

Various embodiments relate to methods and systems for sending and receiving a mobile phone call. More particularly, the embodiments relate to methods and systems for sending and receiving a mobile phone call, wherein a caller may be authenticated or identified by using a public key, a private key, and an incoming phone number.

### Background Art

With the capability of using a plurality of subscriber identity module (SIM) cards in one mobile phone, it is now possible for a single mobile phone device to have a plurality of outgoing phone numbers.

In a case in which a caller makes a call on a single mobile phone by using any one of different SIM cards, and a phone number of the used SIM card from among phone numbers of all of the SIM cards is not registered in an address book of a call recipient, the call recipient may not identify who the caller is.

In addition, confidence tricks (scams) have been carried out in which hackers intercept calls and text messages from particular users by swapping the users' phone numbers with the hackers' third-party SIM cards.

These changes in communication environments have led to an increased demand for new technologies for sending and receiving a mobile phone call.
The document Chang Qingqing 2585016434@qq.com; Su Shenghui reesse@126.com: "Mobile Phone Number Privacy Scheme Based on Lightweight Hash Mapping", ACMPUB27, New York, NY, USA, 15 November 2019 (2019-11-15), - 17 November 2019 (2019-11-17), pages 34-39, DOI: 10.1145/3371676.3371682 relates to the security risk of the mobile phone number and related material stored in the communication system database. The document proposes a scheme which uses the lightweight hash digest of a mobile phone number to replace the original mobile phone number delivery.
The document Anonymous: "encryption - Is it easy to crack a hashed phone number?", Cryptography Stack Exchange, 1 July 2020 (2020-07-01), pages 1-6, XP093283038, Retrieved from the Internet: URL: https://crypto.stackexchange.com/questions/81636/is-it-easy-to-crack-a-hashed- phone-number discusses the security of hashing phone numbers.

### Disclosure of Invention

### Solution to Problem

According to an embodiment, a method according to claim 1 is defined.

According to an embodiment, a system according to claim 11 is defined,

### Brief Description of Drawings

FIG. 1A is a diagram illustrating an example of an operation of a mobile phone device, according to the related art.
FIG. 1B is a diagram illustrating an example of an operation of a mobile phone device, according to an embodiment of the present disclosure.
FIG. 2 is a block diagram illustrating a configuration of a system for sending and receiving a mobile phone call, according to an embodiment of the present disclosure.
FIG. 3 is a flowchart of a method of sending and receiving a mobile phone call, according to an embodiment of the present disclosure.
FIG. 4 is a diagram illustrating a data flow in a system for sending and receiving a mobile phone call, according to an embodiment of the present disclosure.
FIG. 5 is a block diagram illustrating a configuration of a first device according to an embodiment of the present disclosure.
FIG. 6 is a block diagram for describing in more detail a configuration of a first device according to another embodiment of the present disclosure.
FIG. 7 is a flowchart of a method, performed by a first device, of sending a mobile phone call, according to an embodiment of the present disclosure.
FIG. 8 is a diagram illustrating an example in which a mobile phone device manages an address book, according to an embodiment of the present disclosure.
FIG. 9 is a diagram illustrating an example in which a first device generates a caller representative code, according to an embodiment of the present disclosure.
FIG. 10 is a block diagram illustrating a configuration of a second device according to an embodiment of the present disclosure.
FIG. 11 is a flowchart of a method, performed by a second device, of receiving a mobile phone call, according to an embodiment of the present disclosure.
FIG. 12A is a diagram illustrating an example in which a second device generates an entry in an address book, according to an embodiment of the present disclosure.
FIG. 12B is a diagram illustrating an example in which a second device updates an address book, according to an embodiment of the present disclosure.
FIG. 12C is a diagram illustrating an example of an address book managed by a second device, according to an embodiment of the present disclosure.
FIG. 13 is a flowchart of a method, performed by a second device, of receiving a mobile phone call, according to an embodiment of the present disclosure.
FIG. 14 is a flowchart of a method, performed by a second device, of receiving a mobile phone call, according to an embodiment of the present disclosure.
FIG. 15 is a flowchart of a method, performed by a second device, of receiving a mobile phone message, according to an embodiment of the present disclosure.
FIG. 16 is a flowchart of a method of sending and receiving a mobile phone call, according to an embodiment of the present disclosure.

### Mode for the Invention

Hereinafter, embodiments of the present disclosure will be described in detail with reference to the accompanying drawings to enable those of skill in the art to perform the disclosure without any difficulty. The present disclosure may, however, be embodied in many different forms and should not be construed as being limited to embodiments set forth herein.

Although the terms used herein are generic terms, which are currently widely used and are selected by taking into consideration functions thereof, the meanings of the terms may vary according to intentions of those of ordinary skill in the art, legal precedents, or the advent of new technology. Thus, the terms should be defined not by simple appellations thereof but based on the meanings thereof and the context of descriptions throughout the present disclosure.

In addition, terms used herein are for describing a particular embodiment, and are not intended to limit the scope of the present disclosure.

Throughout the present specification, when a part is referred to as being "connected to" another part, it may be "directly connected to" the other part or be "electrically connected to" the other part through an intervening element.

The term "the" and other demonstratives similar thereto in the present specification (especially in the following claims) should be understood to include a singular form and plural forms. In addition, when there is no description explicitly specifying an order of operations of a method according to the present disclosure, the operations may be performed in an appropriate order. The present disclosure is not limited to the described order of the operations.

As used herein, phrases such as "in some embodiments" or "in an embodiment" does not necessarily indicate the same embodiment.

Some embodiments of the present disclosure may be represented by block components and various process operations. Some or all of the functional blocks may be implemented by any number of hardware and/or software elements that perform particular functions. For example, the functional blocks of the present disclosure may be embodied by at least one microprocessor or by circuit components for a certain function. In addition, for example, the functional blocks of the present disclosure may be implemented by using various programming or scripting languages. The functional blocks may be implemented by using various algorithms executable by one or more processors. In addition, the present disclosure may employ known technologies for electronic settings, signal processing, and/or data processing. Terms such as "mechanism", "element", "unit", or "component" are used in a broad sense and are not limited to mechanical or physical components.

In addition, connection lines or connection members between components illustrated in the drawings are merely exemplary of functional connections and/or physical or circuit connections. Various alternative or additional functional connections, physical connections, or circuit connections between components may be present in a practical device.

In addition, as used herein, the terms such as "...er (or)", "... unit", "... module", etc., denote a unit that performs at least one function or operation, which may be implemented as hardware or software or a combination thereof.

In addition, as used herein, the term "user" may refer to a person who uses a mobile phone device to control a function or operation of the mobile phone device.

As used herein, the term "mobile phone device" may refer to a variety of mobile devices capable of sending and receiving a mobile phone call. For example, mobile phone devices may be implemented in various forms such as smart phones, smart watches, tablet personal computers (PCs), laptop computers, netbook computers, personal digital assistants (PDAs), portable multimedia players (PMPs), or wearable devices.

Hereinafter, the present disclosure will be described in detail with reference to the accompanying drawings.

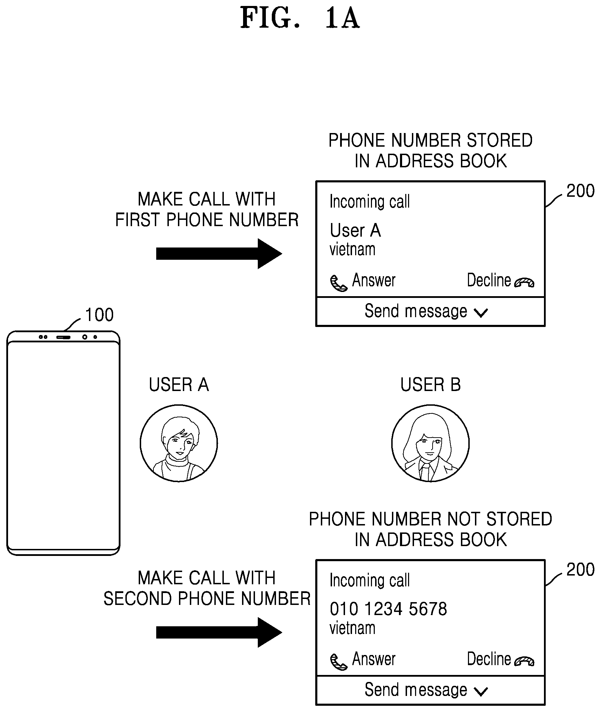

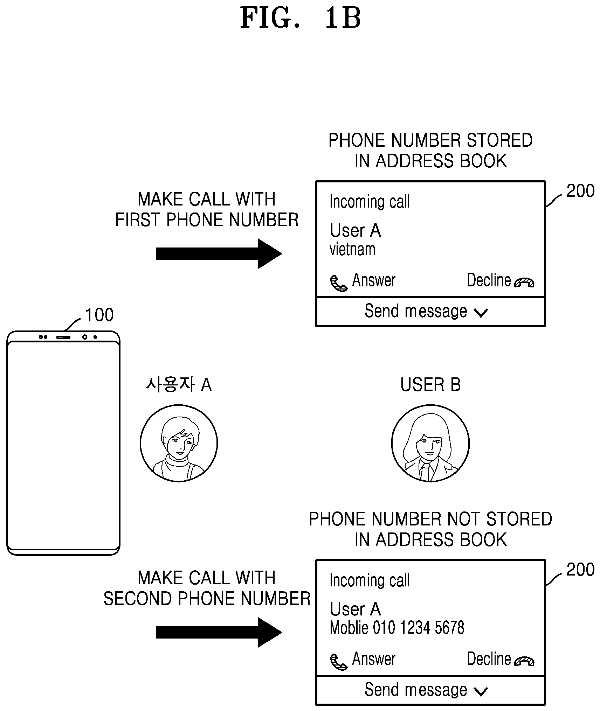

FIG. 1A is a diagram illustrating an example of an operation of a mobile phone device according to the related art, and FIG. 1B is a diagram illustrating an example of an operation of a mobile phone device according to an embodiment of the present disclosure.

In the present disclosure, a first device 100 and a second device 200 may be mobile phone devices. In the present disclosure, user A may be a user of the first device 100, and user B may be a user of the second device 200.

In the present disclosure, the first device 100 or the second device 200 may use a plurality of subscriber identity module (SIM) cards. The plurality of SIM cards may include physical universal SIMs (USIMs) or embedded SIMs (eSIMs). The physical USIMs may include USIMs having various sizes, such as standard USIMs, micro-USIMs, or nano-USIMs. eSIM stands for embedded SIM, which means it uses an eSIM chip inside a device, eliminating the need for a physical USIM card.

In the embodiments of FIGS. 1A and 1B, the first device 100 may use a first phone number using a first SIM card, and a second phone number using a second SIM card. The second device 200 receiving a call from the first device 100 may store the first phone number of user A in its address book, but may not store the second phone number of user A.

In the embodiments of FIGS. 1A and 1B, the first device 100 may send a mobile phone call to the second device by using the first phone number using the first SIM card. In this case, the second device 200 may receive the first phone number as an incoming phone number. The second device 200 may search the address book for the received first phone number, and display, on a display, the user A corresponding to the first phone number, as the sender of the mobile phone call.

In the embodiment of FIG. 1A according to the related art, the first device 100 may send a mobile phone call to the second device 200 by using the second phone number using the second SIM card. In this case, the second device 200 may receive the second phone number as an incoming phone number. As a result of searching the address book for the received second phone number, the second device 200 may recognize that no users corresponding to the second phone number are stored in the address book. In this case, the second device 200 cannot automatically identify to whom the incoming phone number corresponds, and thus may display the incoming phone number as is on a screen.

In the embodiment of FIG. 1B according to an embodiment of the present disclosure, the first device 100 may send a mobile phone call to the second device by using the second phone number using the second SIM card. In this case, the second device 200 may receive the second phone number as an incoming phone number. As a result of searching the address book for the received second phone number, the second device 200 may recognize that no users corresponding to the second phone number are stored in the address book. However, even when the second phone number is not stored in the address book, the second device 200 according to an embodiment of the present disclosure may confirm that the second phone number is another phone number of user A, by using a public key received from the first device 100. In this case, the second device 200 may identify user A as the sender of the mobile phone call and display the identified sender on the display.

In addition, according to an embodiment of the present disclosure, because a public key is generated to be unique to each device, the second device 200 may use the public key or the like to authenticate whether the received mobile phone call is sent actually by the first device 100 owned by user A.

This will be described in detail below.

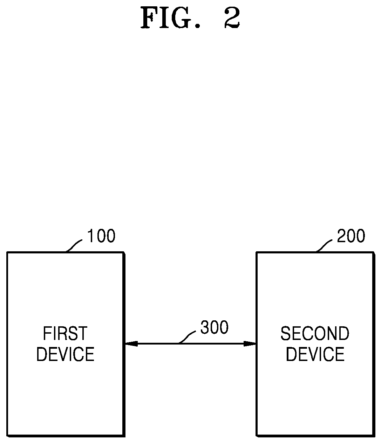

FIG. 2 is a block diagram illustrating a configuration of a system for sending and receiving a mobile phone call, according to an embodiment of the present disclosure.

The system for sending and receiving a mobile phone call according to an embodiment of the present disclosure may include the first device 100, the second device 200, and a network 300.

In an embodiment, the first device 100 may generate a public key and a private key.

In an embodiment, the first device 100 may generate a public key and a private key by an authorized authentication institution.

In an embodiment, each of the public key and the private key may be paired with a passphrase to be protected.

In an embodiment, the private key may be restored by using the passphrase.

In the present specification, the term "passphrase" may refer to a string of words that is longer than a typical password, easier to remember, difficult to crack or hack, and used for authentication.

To prevent a hacker from swapping a user's mobile phone number with the hacker's SIM card, the first device 100 may strictly limit generation of public keys and private keys. For example, the first device 100 may be configured to generate a public key and a private key only when the user sets a security method.

When the user deletes the security method, the first device 100 may discard the public key and the private key such that they are no longer available.

In the present disclosure, a public key and a private key may be generated to be unique to a device. That is, one device may have one public key and one private key. A plurality of SIM cards used in a single device may be assigned the same public key and private key.

In an embodiment of the present disclosure, a public key or a private key may be used to identify whether a user is a legitimate user when changing or reissuing a SIM card. When the user fails to provide the correct public key, changing or reissuing a SIM card may be restricted.

For example, in a case a user loses a SIM card, a person who finds the SIM card cannot provide a public key corresponding to the SIM card, and thus cannot exploit the SIM card.

In an embodiment of the present disclosure, a public key or private key may be required to perform security-critical change procedures such as changing an account, a password, or a one-time password (OTP). That is, the user may change an account, a password, an OTP, or the like only by providing the correct public key or private key.

In an embodiment of the present disclosure, the public key may prevent confidence tricks (scam) by making it impossible for hackers to swap the user's phone number with another SIM card without providing the public key or private key.

In an embodiment of the present disclosure, when a SIM card of a mobile phone call sender or recipient is transferred to another person, the mobile phone device may cause a message or a pop-up message to be displayed on the mobile phone device of the counterpart to warn of the transfer of the SIM card.

In an embodiment of the present disclosure, a private key may be used to encrypt information related to a phone number, and a public key may be used to decrypt the encrypted information related to the phone number.

In an embodiment, the public key of the sender device, i.e., the first device 100, may be received by the device receiving the mobile phone, i.e., the second device 200, stored in the address book, and used to identify the sender of an incoming call.

In an embodiment, the first device 100 may generate caller data by hashing a phone number from which a mobile phone call is to be sent.

In the present specification, the term "hash" may refer to converting a digital string of numbers into a shorter value or key that represents the original digital string of numbers, thereby allowing faster retrieval than using the original value. Hashed data may be used for retrieval by indexing items within a database.

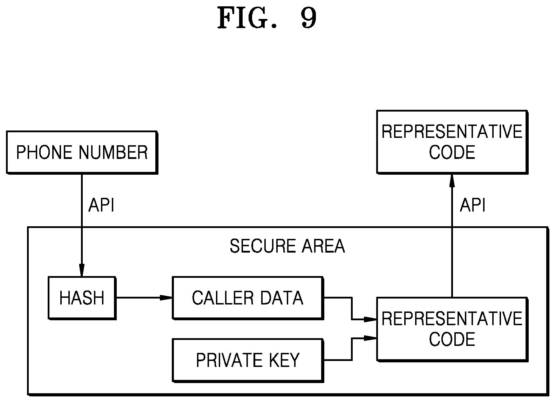

Generation of caller data will be described in detail below with reference to FIG. 9, etc.

In an embodiment, the first device 100 may generate a caller representative code by encrypting the generated caller data by using the private key.

In an embodiment, when the first device 100 sends a mobile phone call, the first device 100 may transmit the caller representative code and the public key to the second device 200.

In an embodiment, the second device 200 may determine whether the public key received from the first device 100 exists in the address book, and when the received public key exists in the address book, obtain the caller data by decrypting the received caller representative code by using the public key.

In an embodiment, the second device 200 may hash an incoming phone number received from the network 300.

In an embodiment, the second device 200 may identify the sender of the mobile phone call by comparing the hashed incoming phone number with the obtained caller data.

In an embodiment, the network 300 may receive data from the first device 100 and transmit the data to the second device 200.

In an embodiment, the network 300 may transmit an incoming phone number to the second device 200.

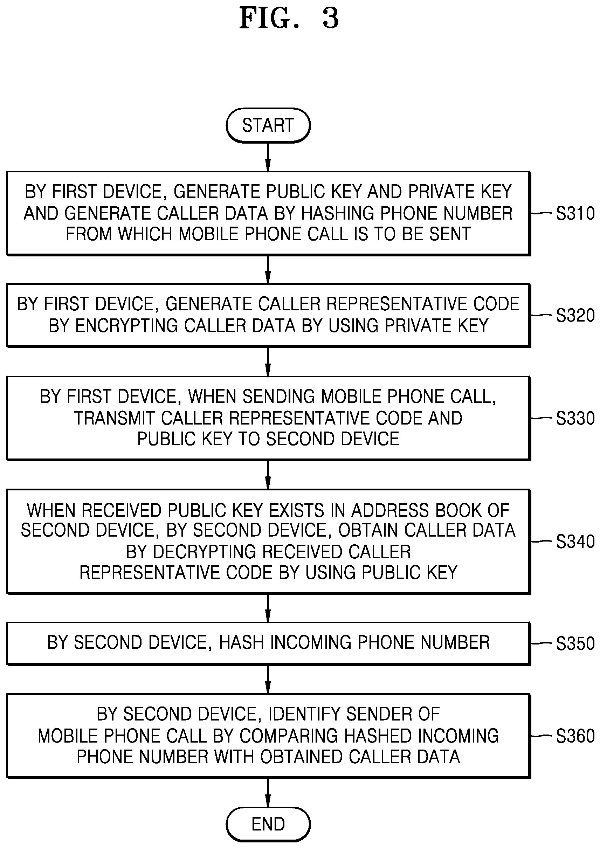

FIG. 3 is a flowchart of a method of sending and receiving a mobile phone call, according to an embodiment of the present disclosure.

Referring to FIG. 3, in a system for sending and receiving a mobile phone call, the first device 100 may generate a public key and a private key and generate caller data by hashing a phone number from which a mobile phone call is to be sent (S310).

Redundant descriptions provided above with reference to FIG. 2 regarding the public key and the private key will be omitted.

When the first device 100 has already generated the public key and the private key, the generation of the public key and the private key may be omitted.

The phone number from which the mobile phone call is to be sent may be a phone number corresponding to a SIM card selected by user A to be used to send the mobile phone call, from among the plurality of SIM cards used by the first device 100.

The first device 100 may generate the caller data by hashing the phone number from which the mobile phone call is to be sent. The hashing will be described in detail below with reference to FIG. 9, etc.

In the system for sending and receiving a mobile phone call, the first device 100 may generate a caller representative code by encrypting the caller data by using the private key (S320).

In the system for sending and receiving a mobile phone call, when sending the mobile phone call, the first device 100 may transmit the caller representative code and the public key to the second device (S330).

In an embodiment, the first device 100 may transmit the caller representative code and the public key to the second device via the network 300. The transmission may be performed automatically without user intervention.

In the system for sending and receiving a mobile phone call, when the received public key exists in the address book of the second device 200, the second device 200 may obtain caller data by decrypting the received caller representative code by using the public key (S340).

The second device 200 may determine whether the received public key of the first device 100 exists in the address book of the second device 200. When the received public key exists in the address book of the second device 200, the second device 200 may obtain caller data by decrypting the received caller representative code by using the received public key of the first device 100.

The obtained caller data may be identical to the caller data generated by the first device 100 in operation S310.

In the system for sending and receiving a mobile phone call, the second device 200 may hash an incoming phone number (S350).

The second device 200 may hash the incoming phone number by using the same hash function as that used by the first device 100.

In the system for sending and receiving a mobile phone call according to an embodiment, all mobile phone devices may share a hash function.

In the embodiment of FIG. 3, operation S340 is illustrated as being performed before operation S350, but operations S340 and S350 may be performed in another order or may be performed simultaneously.

In the system for sending and receiving a mobile phone call, the second device 200 may identify the sender of the mobile phone call by comparing the hashed incoming phone number with the obtained caller data (S360).

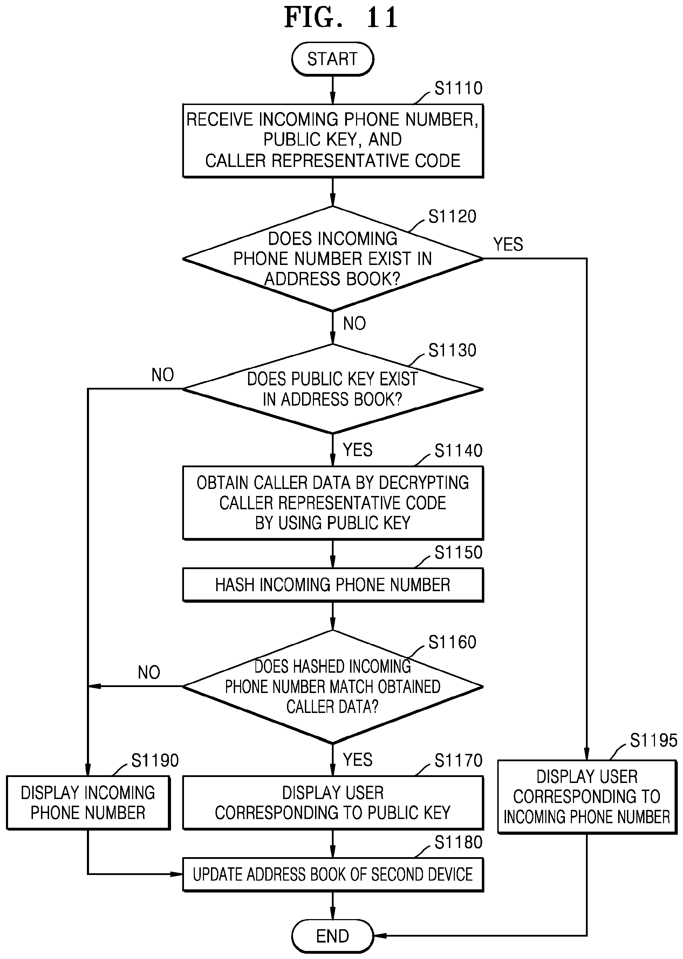

The second device 200 identifying the sender of the mobile phone call will be described in detail below with reference to FIGS. 11, 13, 14, 15, etc.

A method of sending and receiving a mobile phone call according to an embodiment of the present disclosure may include, by the first device 100, generating a public key and a private key, by the first device 100, when sending a mobile phone call, transmitting a caller representative code and the public key to the second device 200, and, by the second device 200, when the received public key exists in the address book of the second device 200, identifying a user corresponding to the public key in the address book of the second device 200, as the sender of the mobile phone call. In the present embodiment, the other operations described in the embodiment of FIG. 3 may be omitted. In the present embodiment, in a case in which the first device 100 uses a plurality of SIM cards, and only a first phone number among them is registered in the address book of the second device 200, when the first device 100 sends a mobile phone call with a second phone number that is not registered in the address book of the second device 200, the second device 200 may detect that the call is made by the user of the first device 100. However, the present embodiment may not include security features against swapping of mobile phone numbers by hackers. That is, even in a case in which a hacker swaps a mobile phone number of the first device 100 with the hacker's SIM card to impersonate the user of the first device 100, the second device 200 may display the sender of the mobile phone call as the user of the first device 100.

A method of sending and receiving a mobile phone call according to an embodiment of the present disclosure may include, by the first device 100, generating a public key and a private key, by the first device 100, generating a caller representative code by encrypting a phone number from which a mobile phone call is to be sent by using the private key, by the first device 100, when sending the mobile phone call, transmitting the caller representative code and the public key to the second device, by the second device 200, when the received public key exists in the address book of the second device 200, obtaining a phone number of the sender by decrypting the received caller representative code by using the public key, and by the second device 200, identifying the sender of the mobile phone call by comparing a received incoming phone number with the obtained phone number. The present embodiment omits the hashing of the mobile phone number in the embodiment of FIG. 3. In a case in which hashing of a mobile phone number, the speed of retrieval may be reduced. In the present embodiment, in a case in which the first device 100 uses a plurality of SIM cards, and only a first phone number among them is registered in the address book of the second device 200, when the first device 100 sends a mobile phone call with a second phone number that is not registered in the address book of the second device 200, the second device 200 may detect that the call is made by the user of the first device 100. The present embodiment may include security features against swapping of mobile phone numbers by hackers. That is, even in a case in which a hacker swaps a mobile phone number of the first device 100 with the hacker's SIM card to impersonate the user of the first device 100, the second device 200 may not display the sender of the mobile phone call as the user of the first device 100.

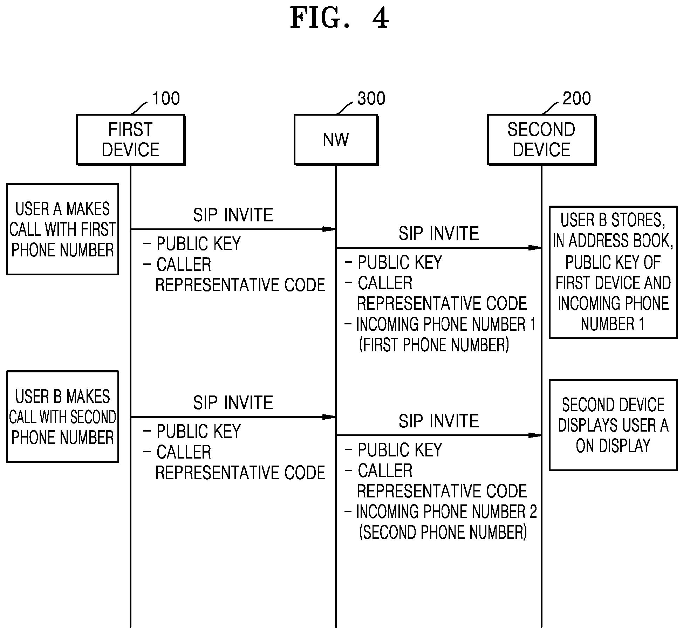

FIG. 4 is a diagram illustrating a data flow in a system for sending and receiving a mobile phone call, according to an embodiment of the present disclosure.

When user A, who a user of the first device 100, makes a mobile phone call to the second device 200 by using a first phone number, the first device 100 may transmit, to the network 300, a message including the public key of the first device 100 and the caller representative code of the first device 100.

In an embodiment, the message may be a Session Initiation Protocol (SIP) invite message.

The network 300 may add incoming phone number 1 to the received message and transmit, to the second device 200, the message including the public key of the first device 100, the caller representative code of the first device 100, and incoming phone number 1.

In an embodiment, incoming phone number 1 may be the same as the first phone number.

In an embodiment, incoming phone number 1 may have been obtained by the network 300.

The first device 100 may transmit the public key of the first device 100 and the caller representative code of the first device 100 to the second device 200 via the network 300.

Incoming phone number 1 may be transmitted to the second device 200 by the network 300.

Incoming phone number 1 may be different from an incoming phone number that is transmitted by the first device 100 to the second device 200.

The second device 200 may store the received first phone number and public key of the first device 100 in an address book for user A.

After the second device 200 stores the received first phone number and public key of the first device 100 in the address book for user A, user A, who is the user of the first device 100, may send a mobile phone call to the second device 200 by using a second phone number.

When user A, who is the user of the first device 100, sends the mobile phone call to the second device 200 by using the second phone number, the first device 100 may transmit, to the network 300, a message including the public key of the first device 100 and the caller representative code of the first device 100.

In an embodiment, the message may be an SIP invite message.

The network 300 may add incoming phone number 2 to the received message and transmit, to the second device 200, the message including the public key of the first device 100, the caller representative code of the first device 100, and incoming phone number 2.

In an embodiment, incoming phone number 2 may be the same as the second phone number.

In an embodiment, incoming phone number 2 may have been obtained by the network 300.

The first device 100 may transmit the public key of the first device 100 and the caller representative code of the first device 100 to the second device 200 via the network 300.

Incoming phone number 2 may be transmitted to the second device 200 by the network 300.

Incoming phone number 2 may be different from an incoming phone number that is transmitted by the first device 100 to the second device 200.

The second device 200 may detect that the received public key of the first device 100 exists in the address book. The second device 200 may search the address book and confirm that the received public key of the first device 100 matches the public key of user A stored in the address book.

The second device 200 may display, on a display, user A, who is a user corresponding to the received public key, as the sender of the incoming mobile phone call.

In an embodiment, the second device 200 may search the address book for the received public key, and when the received public key matches the public key of user A stored in the address book, and a result of decrypting the received caller representative code matches the incoming phone number, display, on the display, user A, who is the user corresponding to the received public key, as the sender of the incoming mobile phone call.

In an embodiment, the second device 200 may update the address book by adding the second phone number as a mobile phone number of user A.

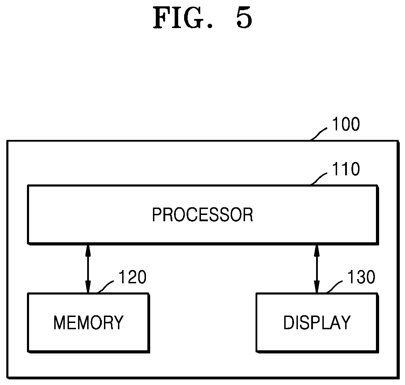

FIG. 5 is a block diagram illustrating a configuration of a first device according to an embodiment of the present disclosure.

Referring to FIG. 5, the first device 100 may include a processor 110, a memory 120, and a display 130.

The memory 120 may store programs the processor 110 to perform processing and control. In addition, the memory 120 may store data input to or output from the first device 100.

The memory 120 may include at least one of an internal memory (not shown) and an external memory (not shown). The memory 120 may store control history information, current environment information, and state information.

The memory 120 may include at least one of a flash memory-type storage medium, a hard disk-type storage medium, a multimedia card micro-type storage medium, a card-type memory (e.g., SD or XD memory), random-access memory (RAM), static RAM (SRAM), read-only memory (ROM), electrically erasable programmable ROM (EEPROM), programmable ROM (PROM), magnetic memory, a magnetic disk, and an optical disc.

The internal memory may include, for example, at least one of a volatile memory (e.g., dynamic RAM (DRAM), SRAM, synchronous DRAM (SDRAM), etc.), a non-volatile memory (e.g., one-time programmable read-only memory (OTPROM), programmable ROM (PROM), erasable programmable ROM (EPROM), electrically erasable programmable ROM (EEPROM), mask ROM, flash ROM, etc.), a hard disk drive (HDD), or solid-state drive (SSD).

According to an embodiment, the processor 110 may load a command or data received from at least one of the non-volatile memory or other components into a volatile memory, and process the command or data. In addition, the processor 110 may store, in the non-volatile memory, data received from other components or generated by the processor 110.

The external memory may include, for example, at least one of CompactFlash (CF), Secure Digital (SD), Micro-SD, Mini-SD, eXtreme Digital (xD), or Memory Stick.

The memory 120 may store one or more instructions executable by the processor 110.

In an embodiment, the memory 120 may store various types of information input through an input/output unit (not shown).

In an embodiment, the memory 120 may store instructions for controlling the processor to generate a public key and a private key, generate caller data by hashing a phone number from which a mobile phone call is to be sent, generate a caller representative code by encrypting the caller data by using the private key, and when sending the mobile phone call, transmit the caller representative code and the public key to a second device.

When a user input is received or a preset and stored condition is satisfied, the processor 110 may execute an operating system (OS) and various applications stored in the memory 120.

The processor 110 may include RAM to store signals or data input from outside the first device 100 or to be used as a storage area for various operations performed by the first device 100, and ROM storing a plurality of instructions and/or a control program for controlling the first device 100.

The processor 110 may include a single core, dual cores, triple cores, quad cores, or cores corresponding to a multiple thereof. In addition, the processor 110 may include a plurality of processors. For example, the processor 110 may be implemented as a main processor (not shown) and a sub-processor (not shown) operating in a sleep mode.

In addition, the processor 110 may include at least one a central processing unit (CPU), a graphics processing unit (GPU), and a video processing unit (VPU). Alternatively, according to an embodiment, the processor 110 may be implemented as a system on a chip (SoC) into which at least one of a CPU, a GPU, and a VPU is integrated.

The processor 110 may execute one or more instructions stored in the memory 120 to control various components of the first device 100.

In an embodiment, the processor 110 may generate a public key and a private key, and generate caller data by hashing a phone number from which a mobile phone call is to be sent. In an embodiment, the processor 110 may generate a caller representative code by encrypting the caller data by using the private key. In an embodiment, when sending the mobile phone call, the processor 110 may transmit the caller representative code and the public key to the second device 200. In an embodiment, the processor 110 may select, as the phone number from which the mobile phone call is to be sent, a phone number corresponding to a selected SIM card from among a plurality of SIM cards used by the first device 100.

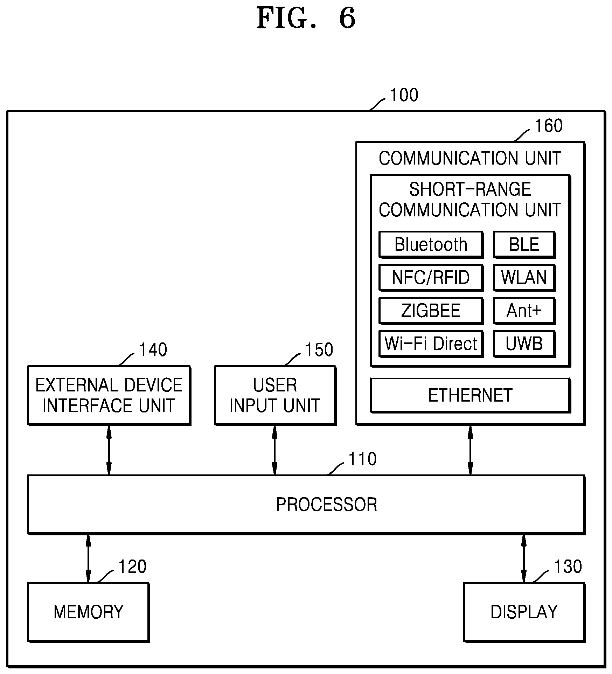

FIG. 6 is a block diagram for describing in more detail a configuration of a first device according to another embodiment of the present disclosure.

The first device 100 of FIG. 6 may be an embodiment of the first device 100 described above with reference to FIGS. 1A, 1B and 2 to 5.

The processor 110 of FIG. 6 corresponds to the processor 110 of FIG. 5, the memory 120 of FIG. 6 corresponds to the memory 120 of FIG. 5, and the display 130 of FIG. 6 corresponds to the display 130 of FIG. 5. Thus, hereinafter, descriptions that are already provided above will be omitted.

According to the embodiment of FIG. 6, the first device 100 may include the processor 110, the memory 120, the display 130, an external device interface unit 140, a user input unit 150, and a communication unit 160. Hereinafter, each of the components will be described.

Redundant descriptions of the processor 110 and the memory 120 that are provided above with reference to FIG. 5 will be omitted.

The processor 110 may control the overall operation of the first device 100 and may execute one or more instructions stored in the memory 120 to control an operation of the first device 100.

For example, the processor 110 may execute programs stored in the memory 120 to control the overall operation of the memory 120, the display 130, the external device interface unit 140, the user input unit 150, the communication unit 160, etc. The processor 110 may include at least one of RAM, ROM, a CPU, a GPU, and a bus. The RAM, the ROM, the CPU, and the GPU, etc. may be connected to each other through the bus.

The communication unit 160 may perform communication with a plurality of peripheral devices located around the first device 100 via a wired or wireless communication network. In addition, the communication unit 160 may receive situational information that is used to predict a possibility of the user executing an operation. The communication unit 160 may include a short-range communication unit used for short-range communication, and a long-range communication unit (not shown) configured to perform communication with a server for supporting long-range communication according to long-range communication standards.

The short-range wireless communication unit may include, but is not limited to, a Bluetooth communication unit, a Bluetooth Low Energy (BLE) communication unit, a near-field communication unit, a wireless local area network (WLAN) (e.g., Wi-Fi) communication unit, a Zigbee communication unit, and an Infrared Data Association (IrDA) communication unit, a Wi-Fi Direct (WFD) communication unit, an ultra-wideband (UWB) communication unit, an Ant+ communication unit, an Ethernet communication unit, etc.

The communication unit 160 may include a long-range communication module configured to perform communication through a network for Internet communication. In addition, the communication unit 160 may include a communication module configured to perform communication through a communication network conforming to a mobile communication standard such as 3^{rd} Generation (3G), 4^{th} Generation (4G), and/or 5^{th} Generation (5G). In addition, the communication unit 160 may include at least one port for connecting to a peripheral device through a cable in order to communicate with an external device in a wired manner. Accordingly, the communication unit 160 may perform communication with the external device connected thereto in a wired manner through the at least one port.

The external device interface unit 140 may provide an interface environment between the first device 100 and various external devices. The external device interface unit 140 may include an audio/video (A/V) input/output unit. The external device interface unit 140 may be connected to external devices such as digital versatile disk (DVD) and Blu-ray players, game devices, cameras, computers, air conditioners, notebooks, desktops, televisions (TVs), or digital display devices, in a wired or wireless manner. The external device interface unit 140 may transmit, to the processor 110 of the first device 100, image, video, and audio signals, and information about an external device connected thereto, which are input through the external device.

The A/V input/output unit may include a Universal Serial Bus (USB) port, a Composite Video Banking Sync (CVBS) port, a component port, a separate video (S-video) port (analog), a Digital Visual Interface (DVI) port, a High-Definition Multimedia Interface (HDMI) port, a DisplayPort (DP) port, a Thunderbolt port, a red, green, and blue (RGB) port, a D-SUB port, etc., such that information about an external device may be input to the first device 100.

Various peripheral devices may be connected to the first device 100 through the external device interface unit 140.

The user input unit 150 may refer to an input unit configured to receive a user request from a user. The user input unit 150 may include, but is not limited to, at least one of a key pad, a dome switch, a touch pad (e.g., a touch-type capacitive touch pad, a pressure-type resistive overlay touch pad, an infrared sensor-type touch pad, a surface acoustic wave conduction touch pad, an integration-type tension measurement touch pad, a piezoelectric effect-type touch pad), a jog wheel, or a jog switch. The keys may include various types of keys, such as mechanical buttons or wheels formed in various areas such as the front, side, and rear surfaces of the body of the first device 100. The touch panel may detect a touch input of the user, and output a touch event value corresponding to a detected touch signal. In a case in which a touch screen (not shown) is configured by combining the touch panel with a display panel, the touch screen may be implemented with various types of touch sensors, such as a capacitive-type, resistive-type, or piezoelectric-type sensor. The first device 100 according to an embodiment of the present disclosure may obtain the user's request through the user input unit 150.

The display 130 converts an image signal, a data signal, an on-screen display (OSD) signal, a control signal, or the like, which has been processed by the processor 110, to generate a driving signal. The display 130 may be implemented as a plasma display panel (PDP), a liquid-crystal display (LCD), an organic light-emitting diode (OLED), a flexible display, or a three-dimensional (3D) display. In addition, the display 130 may be configured as a touch screen to be used as both an output device and an input device.

The display 130 may output various pieces of content input through the communication unit 160 or the user input unit 150, or output an image stored in the memory 120. In addition, the display 130 may output information input by the user through the user input unit 150, on a screen.

The display 130 may include a display panel. The display panel may be a liquid-crystal display (LCD) panel or a panel including various light-emitting elements such as a light-emitting diode (LED), an organic LED (OLED), or a cold cathode fluorescent lamp (CCFL). In addition, the display panel may include a curved display device having a screen with a curvature, or a flexible display device having an adjustable curvature. The display panel may be a 3D display or an electrophoretic display.

The output resolution of the display panel may include, for example, high definition (HD), full HD, ultra HD, or a higher resolution than ultra HD.

Meanwhile, the block diagrams of the first device 100 illustrated in FIGS. 5 and 6 are block diagrams for an embodiment. Each of the components illustrated in the block diagrams may be integrated, added, or omitted according to the specification of the first device 100 actually implemented. That is, two or more components may be integrated into one component, or one component may be divided into two or more components, as necessary. In addition, a function performed by each block is for describing embodiments, and its detailed operation or device does not limit the scope of the present disclosure.

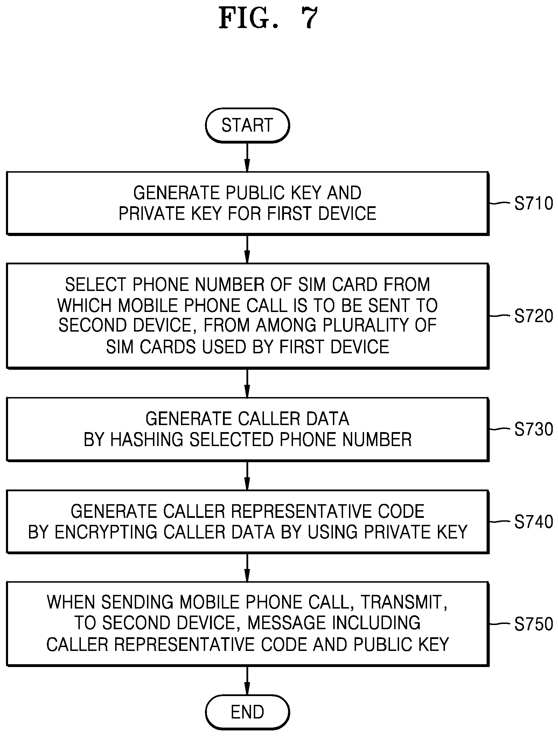

FIG. 7 is a flowchart of a method, performed by a first device, of sending a mobile phone call, according to an embodiment of the present disclosure.

Referring to FIG. 7, the first device 100 may generate a public key and a private key for the first device 100 (S710).

The public key and the private key for the first device 100 may be the same as the public key and the private key described above with reference to FIG. 2.

When the first device 100 has already generated the public key and the private key, the generation of the public key and the private key (S710) may be omitted.

The public key may be transmitted to another external mobile phone device, etc., via the network 300.

According to an embodiment of the present disclosure, mobile phone devices may add public key items in their address books, and store, in the address books, public keys received from other mobile phone devices along with names, phone numbers, email addresses, etc.

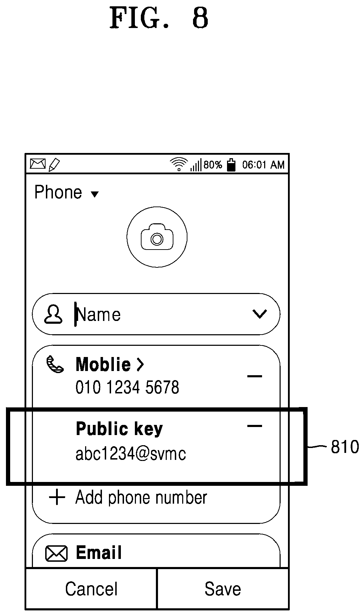

FIG. 8 is a diagram illustrating an example in which a mobile phone device manages an address book, according to an embodiment of the present disclosure.

The first device 100 may store a public key received from another external mobile phone device, in an address book through an address book input process as illustrated in FIG. 8.

The first device 100 may store a public key 810 received from the other mobile phone device in the address book along with a name, a phone number, an email address, etc.

In the embodiment of FIG. 8, the received public key 810 may be 'abc1234@svmc'. The format, length, and configuration of the public key are not limited to 'abc1234@svmc', and may be defined in various manners.

In an embodiment, when a call is received from a mobile phone number of which only the phone number is stored in the address book and no public key is stored in the address book for the first time, the first device 100 may update the address book with the received public key after the user finishes the call from the phone number.

In an embodiment, before updating the address book, the first device 100 may receive a confirmation from the user regarding whether to update the address book.

In an embodiment, when a call is received from a mobile phone number of which only the phone number is stored in the address book and no public key is stored in the address book for the first time, the first device 100 may automatically update the address book with the received public key.

In an embodiment, the first device 100 may set whether to, when a call is received from a mobile phone number of which only the phone number is stored in the address book and no public key is stored in the address book for the first time, update the address book with the received public key automatically or after receiving a confirmation from the user regarding whether to update the address book.

The first device 100 may select a phone number of a SIM card from which a mobile phone call is to be sent to the second device 200, from among the plurality of SIM cards used by the first device 100 (S720).

The plurality of SIM cards used by the first device 100 may use the same public key but different mobile phone numbers. Thus, the second device 200 may detect different mobile phone numbers using the same public key, as a mobile phone number of the same user.

The first device 100 may generate caller data by hashing the selected phone number (S730).

The first device 100 may generate a caller representative code by encrypting the caller data by using the private key (S740).

Processes in which the first device 100 generates the caller data by hashing the selected phone number and generates the caller representative code by encrypting the caller data by using the private key are illustrated in FIG. 9 in detail.

FIG. 9 is a diagram illustrating an example in which a first device generates a caller representative code, according to an embodiment of the present disclosure.

The first device 100 may generate caller data by hashing a phone number selected to be used for sending a mobile phone call. The hashing may be performed in a secure area of the first device 100.

In the present specification, a secure area may refer to an area of a main processor that is inaccessible to other applications. For example, the secure area may include a trusted execution environment (TEE).

In the present disclosure, a trusted execution environment may refer to an area of a main processor where code and data loaded thereinto are guaranteed to be confidentially protected.

In an embodiment, a hash function and data used in a hashing process may be stored in a secure memory of the secure area.

In an embodiment, the private key and the hash function may be stored in the secure area.

In the embodiment of FIG. 9, the phone number of the first device 100 may be loaded into the secure area through an application programming interface (API).

The first device 100 may generate caller data by hashing the phone number loaded into the secure area by using a hash function stored in the secure area.

The first device 100 may generate a caller representative code by encrypting the generated caller data by using the private key stored in the secure area.

The first device 100 may transmit the generated caller representative code outside the secure area through an API.

When sending the mobile phone call, the first device 100 may transmit a message including the caller representative code and the public key to the second device 200 (S750).

The first device 100 may transmit the caller representative code and the public key to the second device 200 via the network 300.

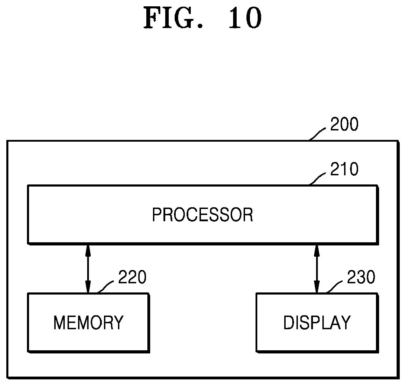

FIG. 10 is a block diagram illustrating a configuration of a second device according to an embodiment of the present disclosure.

Referring to FIG. 10, the second device 200 may include a processor 210, a memory 220, and a display 230.

The memory 220 may store programs the processor 210 to perform processing and control. In addition, the memory 220 may store data input to or output from the second device 200.

The memory 220 may include at least one of internal memory (not shown) and external memory (not shown). The memory 220 may store control history information, current environment information, and state information.

The memory 220 may include at least one of a flash memory-type storage medium, a hard disk-type storage medium, a multimedia card micro-type storage medium, card-type memory (e.g., SD or XD memory), RAM, SRAM, ROM, EEPROM, PROM, magnetic memory, a magnetic disk, and an optical disc.

The internal memory may include, for example, at least one of a volatile memory (e.g., DRAM, SRAM, SDRAM, etc.), a non-volatile memory (e.g., OTPROM, PROM, EPROM, EEPROM, mask ROM, flash ROM, etc.), an HDD, or an SSD.

According to an embodiment, the processor 210 may load a command or data received from at least one of the non-volatile memory or other components into a volatile memory, and process the command or data. In addition, the processor 210 may store, in the non-volatile memory, data received from other components or generated by the processor 210.

The external memory may include, for example, at least one of CF, SD, Micro-SD, Mini-SD, xD, or Memory Stick.

The memory 220 may store one or more instructions executable by the processor 210.

In an embodiment, the memory 220 may store various types of information input through an input/output unit (not shown).

In an embodiment, the memory 220 may store instructions for controlling the processor to, when a received public key exists in the address book of the second device 200, obtain caller data by decrypting a received caller representative code by using the public key, hash an incoming phone number, and identify a sender of a mobile phone call by comparing the obtained caller data with the hashed incoming phone number.

When a user input is received or a preset and stored condition is satisfied, the processor 210 may execute an OS and various applications stored in the memory 220.

The processor 210 may include RAM to store signals or data input from outside the second device 200 or to be used as a storage area for various operations performed by the second device 200, and ROM storing a plurality of instructions and/or a control program for controlling the second device 200.

The processor 210 may include a single core, dual cores, triple cores, quad cores, or cores corresponding to a multiple thereof. In addition, the processor 210 may include a plurality of processors. For example, the processor 210 may be implemented as a main processor (not shown) and a sub-processor (not shown) operating in a sleep mode.

In addition, the processor 210 may include at least one a CPU, a GPU, and a VPU. Alternatively, according to an embodiment, the processor 210 may be implemented as an SoC into which at least one of a CPU, a GPU, and a VPU is integrated.

The processor 210 may execute one or more instructions stored in the memory 220 to control various components of the second device 200.

In an embodiment, when a received public key exists in the address book of the second device 200, the processor 210 may obtain caller data by decrypting a received caller representative code by using the public key. In an embodiment, the processor 210 may hash the incoming phone number. In an embodiment, the processor 210 may identify a sender of a mobile phone call by comparing the hashed incoming phone number with the obtained caller data. In an embodiment, the processor 210 may determine whether the incoming phone number exists in the address book of the second device 200.

In an embodiment, when the incoming phone number does not exist in the address book of the second device 200, and the hashed incoming phone number matches the obtained caller data, the processor 210 may identify, as the sender of the mobile phone call, a user corresponding to the public key stored in the address book of the second device 200, and display the identified sender.

In an embodiment, the processor 210 may update the address book of the second device 200 by adding the incoming phone number as a phone number of the user corresponding to the public key stored in the address book of the second device 200.

In an embodiment, when an incoming phone number, a public key, and a caller representative code are received, the processor 210 may transmit a public key of the second device 200 to the first device 100 such that the first device may compare the received public key of the second device 200 with a public key of the second device 200 that is stored in the address book of the first device 100.

In an embodiment, in response to receiving the incoming phone number, the public key, and the caller representative code, when the incoming phone number exists in the address book of the second device 200, the processor 210 may identify, as the sender of the mobile phone call, a user corresponding to the incoming phone number stored in the address book of the second device 200.

In an embodiment, when the incoming phone number exists in the address book of the second device 200 and the public key does not exist in the address book of the second device 200, the processor 210 may display a notification message.

In an embodiment, when the incoming phone number exists in the address book of the second device 200 and the public key does not exist in the address book of the second device 200, the processor 210 may not identify, as the sender of the mobile phone call, the user corresponding to the incoming phone number stored in the address book of the second device 200, and may display the incoming phone number as the caller.

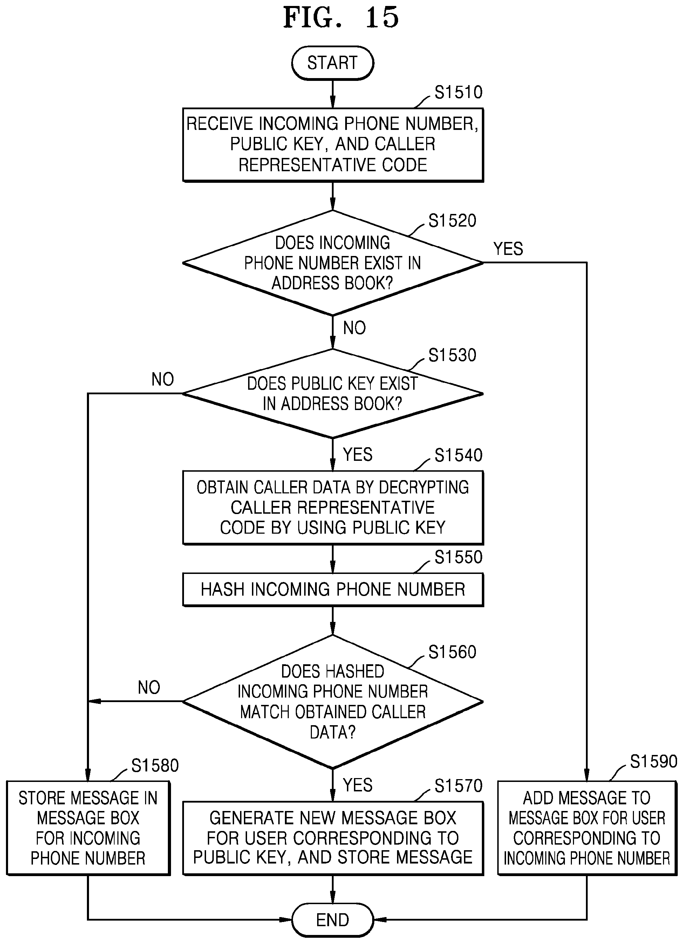

In an embodiment, when the incoming phone number does not exist in the address book of the second device 200 and the public key exists in the address book of the second device 200, the processor 210 may generate a new message box for messages from the identified caller. This will be described in detail below with reference to FIG. 15, etc.

The second device 200 may further include the same components as those of the first device 100 illustrated in FIG. 6.

Meanwhile, the block diagram of the second device 200 illustrated in FIG. 10 is a block diagram for an embodiment. Each of the components illustrated in the block diagrams may be integrated, added, or omitted according to the specification of the second device 200 actually implemented. That is, two or more components may be integrated into one component, or one component may be divided into two or more components, as necessary. In addition, a function performed by each block is for describing embodiments, and its detailed operation or device does not limit the scope of the present disclosure.

FIG. 11 is a flowchart of a method, performed by a second device, of receiving a mobile phone call, according to an embodiment of the present disclosure.

Referring to FIG. 11, the second device 200 may receive an incoming phone number, a public key, and a caller representative code (S1110).

The second device 200 may receive the public key and the caller representative code from the first device 100 via the network 300. The second device 200 may receive the incoming phone number from the network 300.

The second device 200 may determine whether the incoming phone number exists in the address book of the second device 200 (S1120).

When the incoming phone number does not exist in the address book of the second device 200, the second device 200 may determine whether the public key exists in the address book of the second device 200 (S1130).

When the public key exists in the address book of the second device 200, the second device 200 may obtain caller data by decrypting the received caller representative code by using the public key (S1140). Here, the caller data may be identical to the caller data generated by the first device 100 in operation S310 of FIG. 3 or operation S730 of FIG. 7.

The second device 200 may hash the incoming phone number (S1150). The second device 200 may hash the incoming phone number by using the same hash function and hash process as those used by the first device 100. The incoming phone number may be received from the network 300.

In the embodiment of FIG. 11, operation S1140 is illustrated as being performed before operation S1150, but operations S1140 and S1150 may be performed in another order or may be performed simultaneously.

The second device 200 may determine whether the hashed incoming phone number matches the obtained caller data (S1160).

The second device 200 may compare the incoming phone number that is hashed in operation S1150, with the caller data that is obtained in operation S1140.

When the hashed incoming phone number and the obtained caller data match each other, the second device 200 may display a user corresponding to the public key (S1170). When the hashed incoming phone number and the obtained caller data match each other, the second device 200 may identify the user corresponding to the received public key that is found in the address book of the second device 200, as a counterpart of the mobile phone call, i.e., the caller, and display the identified user on the display 230 of the second device 200.

The second device 200 may update the address book of the second device 200 (S1180).

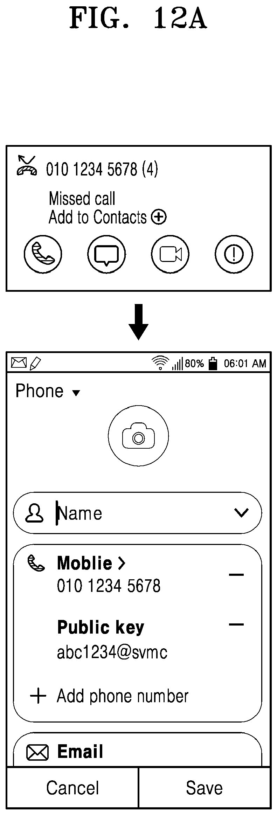

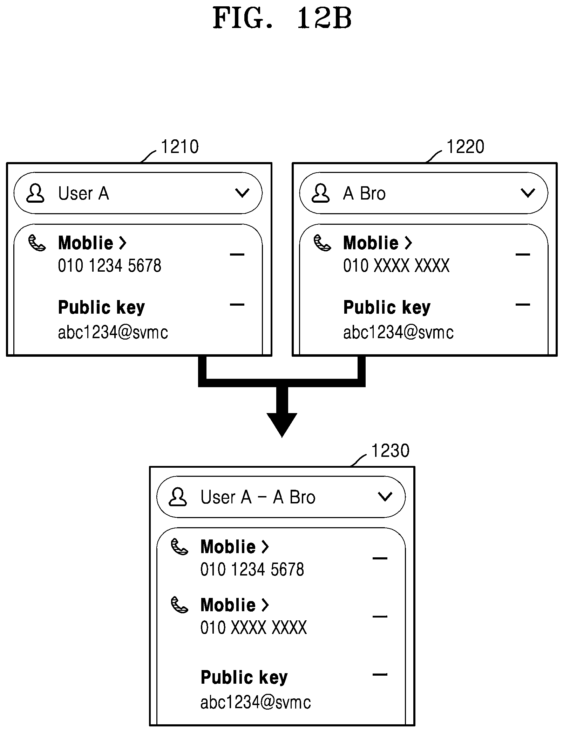

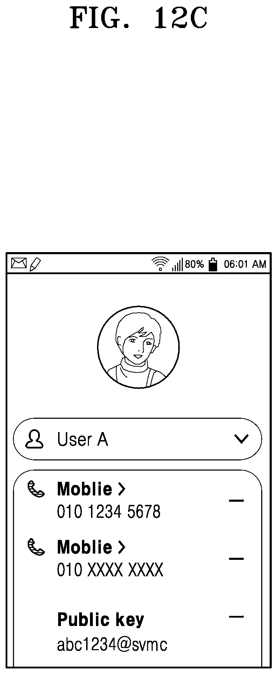

In an embodiment, the second device 200 may add the incoming phone number to the address book as a phone number of the user of the received public code. This will be described in detail below with reference to FIGS. 12A, 12B, 12C, etc.

When the hashed incoming phone number and the obtained caller data do not match each other, the second device 200 may display the incoming phone number (S1190). When the hashed incoming phone number and the obtained caller data do not match each other, the second device 200 may determine that phone number swapping by a hacker, etc. may have occurred. Thus, when the hashed incoming phone number and the obtained caller data do not match each other, the second device 200 may display the incoming phone number as is on the display 230 without determining the user corresponding to the received public key that is found in the address book of the second device 200, as the counterpart of the mobile phone call. When a sender of a call or text message suspected of a confidence trick is displayed as an acquaintance, the user may become careless and be put at risk. Through the above processes, when the hashed incoming phone number and the obtained caller data do not match each other, the second device 200 may alert the user by displaying the call as if it is from an unknown person rather than an acquaintance.

When the public key does not exist in the address book of the second device 200, the second device 200 may display the incoming phone number (S1190). When both the received incoming phone number and the received public key do not exist in the address book of the second device 200, the second device 200 is unable to recognize the counterpart of the mobile phone call, and thus may display the incoming phone number as is.

In the embodiment of FIG. 11, when the incoming phone number exists in the address book of the second device 200, the second device 200 may display a user corresponding to the incoming phone number stored in the address book, as the counterpart of the incoming mobile phone call (S1195).

FIG. 12A is a diagram illustrating an example in which a second device generates an entry in an address book, according to an embodiment of the present disclosure.

As illustrated in FIG. 12A, the second device 200 may generate an entry for a new user in the address book. This process of generating an entry in the address book may include a process of inputting a public key 'abc1234@svmc'. In an embodiment, generation of an entry in the address book illustrated in FIG. 12A may be performed by a user input for instructing to generate an address book.

In an embodiment, the second device 200 may generate an entry for a new user in the address book as illustrated in FIG. 12A. This process of generating an entry in the address book may necessarily include a process of inputting a public key 'abc1234@svmc'. In an embodiment, the second device 200 may manage the public key as an essential input value.

In an embodiment, when generating an entry in the address book, in conjunction with an incoming phone number, a value received for the phone number may be automatically input as a public key.

In an embodiment, a public key may be input manually by receiving a user input.

In an embodiment, the second device 200 may periodically check the address book to automatically update, with a public key, a contact with no public key stored.

In an embodiment, when the second device 200 detects that a public key for a particular user has been changed, the second device 200 may automatically update the address book with the new public key.

FIG. 12B is a diagram illustrating an example in which a second device updates an address book, according to an embodiment of the present disclosure.

In an embodiment, the second device 200 may detect that there are two entries in an address book with the same public key.

In an embodiment, the second device 200 may detect that there are two entries with the same public key and different phone numbers.

In the embodiment of FIG. 12B, the second device 200 may detect that there are two contact entries with 'abc1234@svmc' as a public key, that is, a contact entry 1210 of 'User A' and a contact entry 1220 of 'A bro'.

In an embodiment, the second device 200 may update the contact entries of User A and A bro by merging them into one contact entry 1230 of 'User A - A bro'. The merged contact entry 1230 of 'User A - A bro' may include all of the two different phone numbers.

In an embodiment, the second device 200 may determine the user corresponding to the merged contact entry, as 'User A' or 'A bro'.

In an embodiment, the second device 200 may automatically perform the above address book update operation periodically.

In an embodiment, the second device 200 may perform the address book update operation manually by obtaining an instruction from the user.

FIG. 12C is a diagram illustrating an example of an address book managed by a second device, according to an embodiment of the present disclosure.

In an embodiment, when a public key that is received along with a received mobile phone call exists in the address book, the second device 200 may automatically update, with a new incoming phone number, the existing address book with the same public key as that of the received mobile phone call.

In an embodiment, as in the embodiment of FIG. 12B, when two contact entries that have been separately input by the user include the same public key, the second device 200 may update the address book by merging the two contact entries.

As in the embodiment of FIG. 12C, the address book updated as described above may include a contact entry of 'User A' including a first phone number '010 1234 5678', a second phone number '010 XXXX XXXX', and a public key 'abc1234@svmc'.

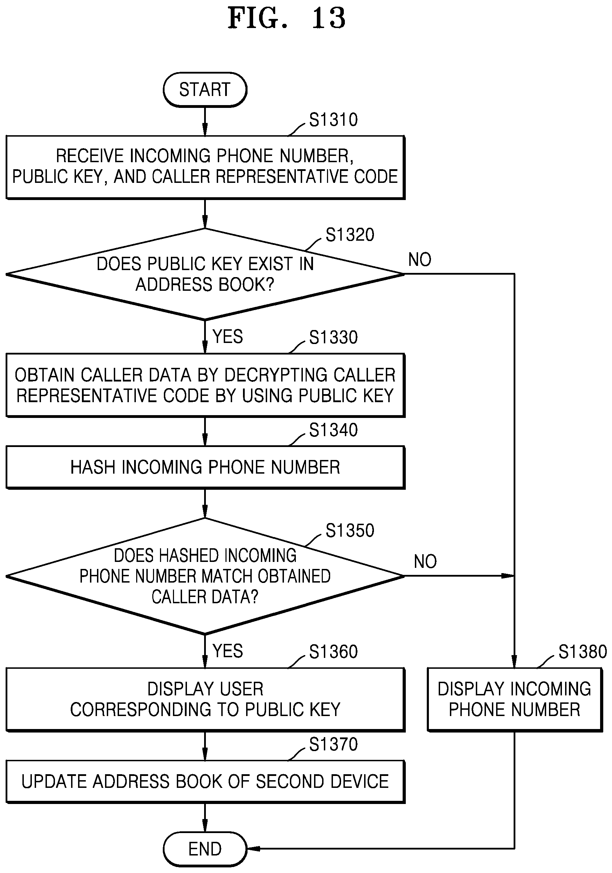

FIG. 13 is a flowchart of a method, performed by a second device, of receiving a mobile phone call, according to an embodiment of the present disclosure.

Referring to FIG. 13, the second device 200 may receive an incoming phone number, a public key, and a caller representative code (S1310).

In the embodiment of FIG. 13, the second device 200 may pair the public key with a user in the address book, rather than pairing a phone number with a user.

The second device 200 may receive the public key and the caller representative code from the first device 100 via the network 300. The second device 200 may receive the incoming phone number from the network 300.

The second device 200 may determine whether the public key exists in the address book of the second device 200 (S1320). In the present embodiment, the second device 200 may check only whether the public key exists in the address book of the second device 200, without checking whether the incoming phone number exists in the address book.

When the public key exists in the address book of the second device 200, the second device 200 may obtain caller data by decrypting the received caller representative code by using the public key (S1330). Here, the caller data may be identical to the caller data generated by the first device 100 in operation S310 of FIG. 3 or operation S730 of FIG. 7.

The second device 200 may hash the incoming phone number (S1340). The second device 200 may hash the incoming phone number by using the same hash function and hash process as those used by the first device 100. The incoming phone number may be received from the network 300.

In the embodiment of FIG. 13, operation S1330 is illustrated as being performed before operation S1340, but operations S1330 and S1340 may be performed in another order or may be performed simultaneously.

The second device 200 may determine whether the hashed incoming phone number matches the obtained caller data (S1350).

The second device 200 may compare the incoming phone number that is hashed in operation S1340, with the caller data that is obtained in operation S1330.

When the hashed incoming phone number and the obtained caller data match each other, the second device 200 may display a user corresponding to the public key (S1360). When the hashed incoming phone number and the obtained caller data match each other, the second device 200 may identify the user corresponding to the received public key that is found in the address book of the second device 200, as a counterpart of the mobile phone call, i.e., the caller, and display the identified user on the display 230 of the second device 200.

The second device 200 may update the address book of the second device 200 (S1370).

In an embodiment, the second device 200 may add the incoming phone number as a phone number of the user of the received public code. Details about these operations may be the same as those described above with reference to FIGS. 12A, 12B, 12C, etc.

When the hashed incoming phone number and the obtained caller data do not match each other, the second device 200 may display the incoming phone number (S13 80). When the hashed incoming phone number and the obtained caller data do not match each other, the second device 200 may determine that phone number swapping by a hacker, etc. may have occurred. Thus, when the hashed incoming phone number and the obtained caller data do not match each other, the second device 200 may display the incoming phone number as is on the display 230 without determining the user corresponding to the received public key that is found in the address book of the second device 200, as the counterpart of the mobile phone call. Through this process, the second device 200 may alert the user by notifying that the call is from an unknown person rather than an acquaintance.

When the public key does not exist in the address book of the second device 200, the second device 200 may display the incoming phone number (S1380). When the received public key does not exist in the address book, the second device 200 may determine that it is unable to recognize the counterpart of the mobile phone call, and thus display the incoming phone number as is.

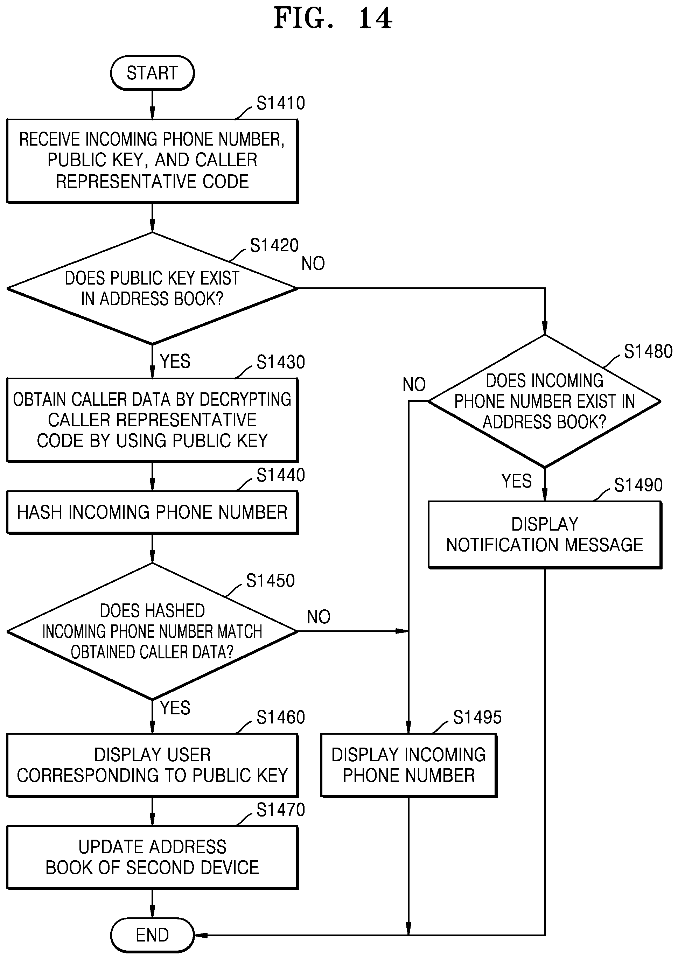

FIG. 14 is a flowchart of a method, performed by a second device, of receiving a mobile phone call, according to an embodiment of the present disclosure.

Referring to FIG. 14, the second device 200 may receive an incoming phone number, a public key, and a caller representative code (S1410).

The second device 200 may receive the public key and the caller representative code from the first device 100 via the network 300. The second device 200 may receive the incoming phone number from the network 300.

The second device 200 may determine whether the public key exists in the address book of the second device 200 (S1420).

When the public key exists in the address book of the second device 200, the second device 200 may obtain caller data by decrypting the received caller representative code by using the public key (S1430). Here, the caller data may be identical to the caller data generated by the first device 100 in operation S310 of FIG. 3 or operation S730 of FIG. 7.

The second device 200 may hash the incoming phone number (S1440). The second device 200 may hash the incoming phone number by using the same hash function and hash process as those used by the first device 100. The incoming phone number may be received from the network 300.

In the embodiment of FIG. 14, operation S1430 is illustrated as being performed before operation S1440, but operations S1430 and S1440 may be performed in another order or may be performed simultaneously.

The second device 200 may determine whether the hashed incoming phone number matches the obtained caller data (S1450).

The second device 200 may compare the incoming phone number that is hashed in operation S1440, with the caller data that is obtained in operation S1430.

When the hashed incoming phone number and the obtained caller data match each other, the second device 200 may display a user corresponding to the public key (S1460). When the hashed incoming phone number and the obtained caller data match each other, the second device 200 may identify the user corresponding to the received public key that is found in the address book of the second device 200, as a counterpart of the mobile phone call, i.e., the caller, and display the identified user on the display 230.

The second device 200 may update the address book of the second device 200 (S1470).

In an embodiment, the second device 200 may add the incoming phone number as a phone number of the user of the received public code. Details about these operations may be the same as those described above with reference to FIGS. 12A, 12B, 12C, etc.

When the hashed incoming phone number and the obtained caller data do not match each other, the second device 200 may display the incoming phone number (S1495). When the hashed incoming phone number and the obtained caller data do not match each other, the second device 200 may determine that phone number swapping by a hacker, etc. may have occurred. Thus, when the hashed incoming phone number and the obtained caller data do not match each other, the second device 200 may display the incoming phone number as is on the display 230 without determining the user corresponding to the received public key that is found in the address book of the second device 200, as the counterpart of the mobile phone call. Through this process, the second device 200 may alert the user by notifying that the call is from an unknown person rather than an acquaintance.

When the public key does not exist in the address book of the second device 200, the second device 200 may determine whether the incoming phone number exists in the address book of the second device 200 (S1480).

When the incoming phone number does not exist in the address book of the second device 200, the second device 200 may display the incoming phone number (S1495). When both the received incoming phone number and the received public key do not exist in the address book of the second device 200, the second device 200 is unable to recognize the counterpart of the mobile phone call, and thus may display the incoming phone number as is.

When the public key does not exist in the address book of the second device 200 and the incoming phone number exists in the address book of the second device 200, the second device 200 may display a notification message (S1490).

Cases in which the public key does not exist in the address book of the second device 200 and the incoming phone number exists in the address book of the second device 200 may include a case in which the public key of the first device 100 that has sent the mobile phone call has been modified, or a case in which a hacker has swapped the first device 100 with the hacker's SIM code so as to impersonate the user of the first device 100.

Thus, when the incoming phone number exists in the address book of the second device 200 but the public key does not exist in the address book of the second device 200, the second device (200) may display a notification message for notifying the user of the second device 200 of a risk. The notification message may be in various forms such as pop-up messages.

FIG. 15 is a flowchart of a method, performed by a second device, of receiving a mobile phone message, according to an embodiment of the present disclosure.

Referring to FIG. 15, the second device 200 may receive an incoming phone number, a public key, and a caller representative code (S1510).

The second device 200 may receive the public key and the caller representative code from the first device 100 via the network 300. The second device 200 may receive the incoming phone number from the network 300.

The second device 200 may determine whether the incoming phone number exists in the address book of the second device 200 (S1520).

When the incoming phone number does not exist in the address book of the second device 200, the second device 200 may determine whether the public key exists in the address book of the second device 200 (S1530).

When the public key exists in the address book of the second device 200, the second device 200 may obtain caller data by decrypting the received caller representative code by using the public key (S1540). Here, the caller data may be identical to the caller data generated by the first device 100 in operation S310 of FIG. 3 or operation S730 of FIG. 7.

The second device 200 may hash the incoming phone number (S1550). The second device 200 may hash the incoming phone number by using the same hash function and hash process as those used by the first device 100. The incoming phone number may be received from the network 300.

In the embodiment of FIG. 15, operation S1540 is illustrated as being performed before operation S1550, but operations S1540 and S1550 may be performed in another order or may be performed simultaneously.

The second device 200 may determine whether the hashed incoming phone number matches the obtained caller data (S1560).

The second device 200 may compare the incoming phone number that is hashed in operation S1550, with the caller data that is obtained in operation S1540.

When the hashed incoming phone number and the obtained caller data match each other, the second device 200 may generate a new message box for a user corresponding to the public key, and store the message (S1570). When the hashed incoming phone number and the obtained caller data match each other, the second device 200 may identify the user corresponding to the received public key that is found in the address book of the second device 200, as the counterpart of the mobile phone message, i.e., the sender. However, the message is received from the same user but with a different phone number, the second device 200 may generate a new message box and store the message therein.

In an embodiment, when the hashed incoming phone number and the obtained caller data match each other, the second device 200 may store the message in an existing message box for the user corresponding to the public key.

When the hashed incoming phone number and the obtained caller data do not match each other, the second device 200 may store the message in a message box for the incoming phone number (S1580).

When the hashed incoming phone number and the obtained caller data do not match each other, the second device 200 may determine that phone number swapping by a hacker, etc. may have occurred. Thus, when the hashed incoming phone number and the obtained caller data do not match each other, the second device 200 may not determine the user corresponding to the received public key found in the address book of the second device 200, as the sender of the mobile phone message. In this case, the second device 200 may generate a new message box for the incoming phone number, and store the message in the generated message box (S1580). When the message box for the incoming phone number already exists, the second device 200 may store the message in the existing message box for the incoming phone number.

Through this process, when the hashed incoming phone number and the obtained caller data do not match each other, the second device 200 may notify the user of the possibility that the message is dangerous, by displaying that the message is not from a user registered in the address book.

When the public key does not exist in the address book of the second device 200, the second device 200 may store the message in the message box for the incoming phone number (S1580). When both the received incoming phone number and the received public key do not exist in the address book of the second device 200, the second device 200 is unable to recognize the sender of the mobile phone message, and thus may generate a message box for the incoming phone number and store the message in the generated message box. When the message box for the incoming phone number already exists, the second device 200 may store the message in the existing message box for the incoming phone number.

Even in this case, the second device 200 may notify the user of the possibility that the message is dangerous, by displaying the message through the message box for the incoming phone number.

When the incoming phone number exists in the address book of the second device 200, the second device 200 may add the message to a message box for a user corresponding to the incoming phone number (S1590).

When the incoming phone number exists in the address book of the second device 200, the second device 200 may determine the user corresponding to the incoming phone number stored in the address book, as the counterpart of the incoming mobile phone call, and generate a message box for the user corresponding to the incoming phone number to store the message, or add the message in the existing message box for the user corresponding to the incoming phone number to store the message.

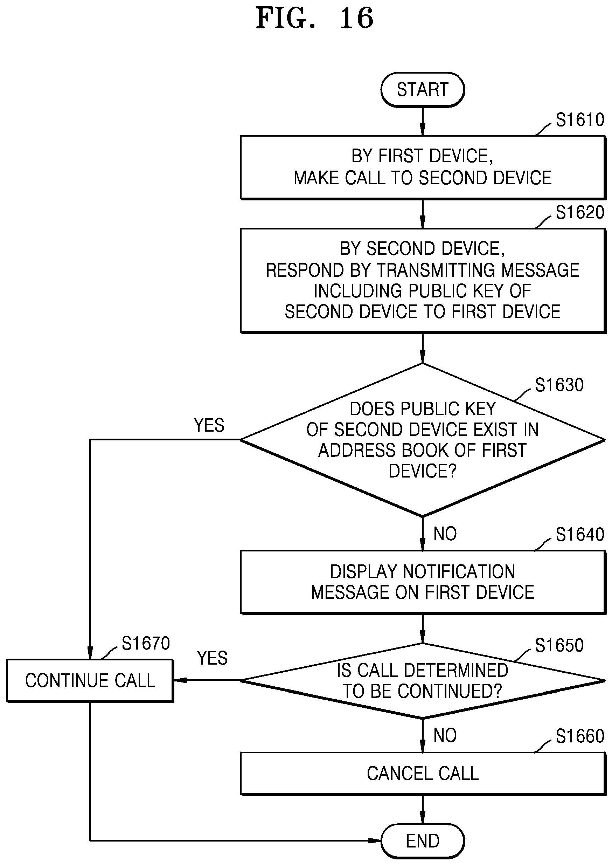

FIG. 16 is a flowchart of a method of sending and receiving a mobile phone call, according to an embodiment of the present disclosure.

Referring to FIG. 16, the first device 100 may send a mobile phone call to the second device 200 (S1610). The first device 100 may select any one of the plurality of SIM cards used by the first device, and send a mobile phone call to the second device 200 by using a phone number corresponding to the selected SIM card.

The second device 200 may respond by transmitting a message including a public key of the second device 200 to the first device 100 (S 1620).

In an embodiment, the second device 200 that have received the mobile phone call from the first device 100 may transmit the public key of the second device 200 or a message including the public key of the second device 200 to the first device 100 in response to receiving the mobile phone call.

In an embodiment, the second device 200 may respond in advance to the mobile phone call from the first device 100 by transmitting the public key of the second device 200 to the first device 100 via the network 300. The responding in advance may be performed automatically, regardless of the user of the second device 200.

The first device 100 may determine whether the public key of the second device 200 exists in the address book of the first device 100 (S1630).

In an embodiment, the first device 100 may receive the public key of the second device 200 via a message from the second device 200.

In an embodiment, the first device 100 may receive the public key of the second device 200 from the second device 200 via the network 300.

The first device 100 may determine whether the received public key of the second device 200 exists in the address book of the first device 100.

When the received public key does not exist in the address book of the first device 100, the first device 100 may display a notification message to the user (S1640).

In an embodiment, when the received public key does not exist in the address book of the first device 100, it may mean that the second device 200 has been used by another person. For example, the user of the second device 200 may no longer use the corresponding SIM card and phone number, and a third party may use the SIM card and phone number. Thus, when the received public key does not exist in the address book of the first device 100, the first device 100 may display, on the display, a notification message that the user of the second device 200 may have been changed. The notification message may be in various forms such as pop-up messages.

The first device 100 may determine whether to continue the call (S 1650).

In an embodiment, the first device 100 may determine whether to continue the call, by receiving a user input as to whether to continue the call.

In an embodiment, by default, the first device 100 may be set to display the notification message that the user of the second device 200 may have been changed, and to continue the phone call. In this case, operation S1650 may be omitted.

When the first device 100 determines not to continue the call, the first device 100 may cancel the call (S 1660).

In an embodiment, upon receiving a user input for discontinuing the call, the first device 100 may determine not to continue the call, and cancel the call.

In an embodiment, the first device 100 may be set to automatically cancel the call because it is likely that the user of the second device 200 has been changed. In this case, operation S1650 may be omitted.

When the first device (100) determines to continue the call, the first device (100) may continue the call (S 1670).

In an embodiment, upon receiving a user input for continuing the call, the first device 100 may continue the call.

When the received public key exists in the address book of the first device 100, the first device 100 may continue the call (S1670). When the received public key exists in the address book of the first device 100, the user of the second device 200 has not been changed, and thus, the first device 100 may continue the call.

A method of sending and receiving a mobile phone call according to an embodiment may be implemented as a computer-readable recording medium including computer-executable instructions such as a computer-executable program module. The computer-readable medium may be any available medium which is accessible by a computer, and may include a volatile or non-volatile medium and a removable or non-removable medium. The computer-readable medium may include program instructions, data files, data structures, or the like separately or in combinations. The program instructions to be recorded on the medium may be specially designed and configured for the present disclosure or may be well-known to and be usable by those skill in the art of computer software. Examples of the computer-readable recording medium include magnetic media such as hard disks, floppy disks, or magnetic tapes, optical media such as a compact disc ROM (CD-ROM) or a DVD, magneto-optical media such as a floptical disk, and hardware devices such as ROM, RAM, or flash memory, which are specially configured to store and execute program commands. Examples of program commands may include not only machine code, such as code made by a compiler, but also high-level language code that is executable by a computer by using an interpreter or the like.

The above description is provided only for illustrative purposes, and those of skill in the art will understand that the present disclosure may be easily modified into other detailed configurations without modifying technical aspects and essential features of the present disclosure. Therefore, it should be understood that the above-described embodiments are exemplary in all respects and are not limited. For example, each element described in a single type may be executed in a distributed manner, and elements described distributed may also be executed in an integrated form.

According to an embodiment, the phone number from which the mobile phone call is to be sent may be a phone number corresponding to a SIM card selected from among a plurality of SIM cards used by the first device.

According to an embodiment, the method of sending and receiving a mobile phone call may further include determining whether the incoming phone number exists in the address book of the second device.

According to an embodiment, the method of sending and receiving a mobile phone call may include, in response to receiving the incoming phone number, the public key and the caller representative code, based on the incoming phone number existing in the address book of the second device, identifying, by the second device, as the sender of the mobile phone call, a user corresponding to the incoming phone number that is stored in the address book of the second device.

According to an embodiment, the method of sending and receiving a mobile phone call may include, based on the incoming phone number existing in the address book of the second device, and the public key not existing in the address book of the second device, displaying a notification message.

According to an embodiment, the method of sending and receiving a mobile phone call may include, based on the incoming phone number existing in the address book of the second device, and the public key not existing in the address book of the second device, displaying the incoming phone number as the sender, without identifying, as the sender of the mobile phone call, a user corresponding to the incoming phone number that is stored in the address book of the second device.

According to an embodiment, the method of sending and receiving a mobile phone call may include, based on the incoming phone number not existing in the address book of the second device, and the hashed incoming phone number and the obtained caller data matching each other, identifying, as the sender of the mobile phone call, a user corresponding to the public key that is stored in the address book of the second device, and displaying the identified sender.

According to an embodiment, the method of sending and receiving a mobile phone call may include updating the address book of the second device by adding the incoming phone number as a phone number of the user corresponding to the public key that is stored in the address book of the second device.

According to an embodiment, the method of sending and receiving a mobile phone call may include, based on the incoming phone number not existing in the address book of the second device, and the public key existing in the address book of the second device, generating a new message box for messages from the identified caller.

According to an embodiment, the method of sending and receiving a mobile phone call may include, based on receiving the incoming phone number, the public key, and the caller representative code, transmitting, by the second device, a public key of the second device to the first device, and based on the received public key not matching a public key of the second device that is stored in an address book of the first device, displaying, by the first device, a notification of a possibility that a phone number of the second device has been changed.

## Claims

1. A method of sending and receiving a mobile phone call, the method comprising:
generating, by a first device (100), a public key and a private key, and generating caller data by hashing a phone number from which the mobile phone call is to be sent;
generating, by the first device (100), a caller representative code by encrypting the caller data by using the private key;
when sending the mobile phone call, transmitting, by the first device (100), the caller representative code and the public key to a second device (200);
based on the received public key existing in an address book of the second device (200), obtaining, by the second device (200), the caller data by decrypting the received caller representative code by using the public key;
hashing, by the second device (200), an incoming phone number; and
identifying, by the second device (200), a sender of the mobile phone call by comparing the hashed incoming phone number with the obtained caller data.

2. The method of claim 1, wherein the phone number from which the mobile phone call is to be sent is a phone number corresponding to a subscriber identity module (SIM) card selected from among a plurality of SIM cards used by the first device (100).

3. The method of any one of claims 1 to 2, further comprising determining, by the second device (200), whether the incoming phone number exists in the address book of the second device (200).

4. The method of any one of claims 1 to 3, further comprising, in response to receiving the incoming phone number, the public key and the caller representative code, based on the incoming phone number existing in the address book of the second device (200), identifying, by the second device (200), as the sender of the mobile phone call, a user corresponding to the incoming phone number that is stored in the address book of the second device (200).

5. The method of any one of claims 1 to 4, further comprising, based on the incoming phone number existing in the address book of the second device (200), and the public key not existing in the address book of the second device (200), displaying, by the second device (200), a notification message.

6. The method of any one of claims 1 to 3, further comprising, based on the incoming phone number existing in the address book of the second device (200), and the public key not existing in the address book of the second device (200), displaying, by the second device (200), the incoming phone number as the sender, without identifying, as the sender of the mobile phone call, a user corresponding to the incoming phone number that is stored in the address book of the second device (200).

7. The method of any one of claims 1 to 3, further comprising, based on the incoming phone number not existing in the address book of the second device (200), and the hashed incoming phone number and the obtained caller data matching each other, identifying, by the second device (200), as the sender of the mobile phone call, a user corresponding to the public key that is stored in the address book of the second device (200), and displaying the identified sender.

8. The method of claim 7, further comprising updating, by the second device (200), the address book of the second device (200) by adding the incoming phone number as a phone number of the user corresponding to the public key that is stored in the address book of the second device (200).

9. The method of any one of claims 1 to 3, further comprising, based on the incoming phone number not existing in the address book of the second device (200), and the public key existing in the address book of the second device (200), generating, by the second device (200), a new message box for messages from the identified sender.

10. The method of any one of claims 1 to 9, further comprising:
by the second device (200), based on receiving the incoming phone number, the public key, and the caller representative code, transmitting a public key of the second device (200) to the first device (100); and
by the first device (100), based on the received public key not matching a public key of the second device (200) that is stored in an address book of the first device (100), displaying a notification of a possibility that a phone number of the second device (200) has been changed.

11. A system for sending and receiving a mobile phone call, the system comprising:
a first device (100) configured to generate a public key and a private key, generate caller data by hashing a phone number from which the mobile phone call is to be sent, generate a caller representative code by encrypting the caller data by using the private key, and when sending the mobile phone call, transmit the caller representative code and the public key to a second device (200); and
the second device (200) configured to, based on the received public key existing in an address book of the second device (200), obtain the caller data by decrypting the received caller representative code by using the public key, hash an incoming phone number, and identify a sender of the mobile phone call by comparing the hashed incoming phone number with the obtained caller data.

12. The system of claim 11, wherein the phone number from which the mobile phone call is to be sent is a phone number corresponding to a subscriber identity module (SIM) card selected from among a plurality of SIM cards used by the first device (100).

13. The system of any one of claims 11 to 12, wherein the second device (200) is further configured to determine whether the incoming phone number exists in the address book of the second device (200).

14. The system of any one of claims 11 to 13, wherein the second device (200) is further configured to, based on the incoming phone number not existing in the address book of the second device (200), and the hashed incoming phone number and the obtained caller data matching each other, identify, as the sender of the mobile phone call, a user corresponding to the public key that is stored in the address book of the second device (200), and display the identified sender.

15. The system of any one of claims 11 to 14, wherein the second device (200) is further configured to, based on receiving the incoming phone number, the public key, and the caller representative code, transmit a public key of the second device (200) to the first device (100), and
the first device (100) is further configured to, based on the received public key of the second device (200) not matching a public key of the second device (200) that is stored in an address book of the first device (100), display a notification of a possibility that a phone number of the second device (200) has been changed.

## Patentansprüche

1. Verfahren zum Senden und Empfangen eines Mobiltelefonanrufs, wobei das Verfahren Folgendes umfasst:
Erzeugen, durch eine erste Vorrichtung (100), eines öffentlichen Schlüssels und eines privaten Schlüssels und Erzeugen von Anruferdaten durch Hashing einer Telefonnummer, von der aus der Mobiltelefonanruf gesendet werden soll;
Erzeugen, durch die erste Vorrichtung (100), eines Anruferidentifikationscodes durch Verschlüsseln der Anruferdaten unter Verwendung des privaten Schlüssels;
beim Versenden des Mobiltelefonanrufs Übertragen, durch die erste Vorrichtung (100), des Anruferidentifikationscodes und des öffentlichen Schlüssels an eine zweite Vorrichtung (200);
basierend darauf, dass der empfangene öffentliche Schlüssel in einem Adressbuch der zweiten Vorrichtung (200) vorhanden ist, Erlangen, durch die zweite Vorrichtung (200), der Anruferdaten durch Entschlüsseln des empfangenen Anruferidentifikationscodes unter Verwendung des öffentlichen Schlüssels;
Hashen, durch die zweite Vorrichtung (200), einer eingehenden Telefonnummer; und
Identifizieren, durch die zweite Vorrichtung (200), eines Senders des Mobiltelefonanrufs durch Vergleichen der gehashten eingehenden Telefonnummer mit den erlangten Anruferdaten.

2. Verfahren nach Anspruch 1, wobei die Telefonnummer, von der aus der Mobiltelefonanruf gesendet werden soll, eine Telefonnummer ist, die einer Karte eines Teilnehmeridentitätsmoduls (SIM) entspricht, die aus einer Vielzahl von SIM-Karten ausgewählt ist, die von der ersten Vorrichtung (100) verwendet wird.

3. Verfahren nach einem der Ansprüche 1 bis 2, ferner umfassend Bestimmen, durch die zweite Vorrichtung (200), ob die eingehende Telefonnummer in dem Adressbuch der zweiten Vorrichtung (200) vorhanden ist.

4. Verfahren nach einem der Ansprüche 1 bis 3, ferner umfassend, als Reaktion auf das Empfangen der eingehenden Telefonnummer, des öffentlichen Schlüssels und des Anruferidentifikationscodes, basierend darauf, dass die eingehende Telefonnummer im Adressbuch der zweiten Vorrichtung (200) vorhanden ist, Identifizieren, durch die zweite Vorrichtung (200), eines Benutzers, der der eingehenden Telefonnummer entspricht, die im Adressbuch der zweiten Vorrichtung (200) gespeichert ist, als Sender des Mobiltelefonanrufs.

5. Verfahren nach einem der Ansprüche 1 bis 4, ferner umfassend, basierend darauf, dass die eingehende Telefonnummer im Adressbuch der zweiten Vorrichtung (200) vorhanden ist und der öffentliche Schlüssel nicht im Adressbuch der zweiten Vorrichtung (200) vorhanden ist, Anzeigen, durch die zweite Vorrichtung (200), einer Benachrichtigungsnachricht.

6. Verfahren nach einem der Ansprüche 1 bis 3, ferner umfassend, basierend darauf, dass die eingehende Telefonnummer im Adressbuch der zweiten Vorrichtung (200) vorhanden ist und der öffentliche Schlüssel nicht im Adressbuch der zweiten Vorrichtung (200) vorhanden ist, Anzeigen, durch die zweite Vorrichtung (200), der eingehenden Telefonnummer als den Sender, ohne Identifizieren eines Benutzers, der der eingehenden Telefonnummer entspricht, die im Adressbuch der zweiten Vorrichtung (200) gespeichert ist, als Sender des Mobiltelefonanrufs.

7. Verfahren nach einem der Ansprüche 1 bis 3, ferner umfassend, basierend darauf, dass die eingehende Telefonnummer nicht im Adressbuch der zweiten Vorrichtung (200) vorhanden ist und die gehashte eingehende Telefonnummer und die erlangten Anruferdaten miteinander übereinstimmen, Identifizieren, durch die zweite Vorrichtung (200), eines Benutzers, der dem öffentlichen Schlüssel entspricht, der im Adressbuch der zweiten Vorrichtung (200) gespeichert ist, als Sender des Mobiltelefonanrufs und Anzeigen des identifizierten Senders.

8. Verfahren nach Anspruch 7, ferner umfassend Aktualisieren, durch die zweite Vorrichtung (200), des Adressbuchs der zweiten Vorrichtung (200) durch Hinzufügen der eingehenden Telefonnummer als Telefonnummer des Benutzers, die dem öffentlichen Schlüssel entspricht, der im Adressbuch der zweiten Vorrichtung (200) gespeichert ist.

9. Verfahren nach einem der Ansprüche 1 bis 3, ferner umfassend, basierend darauf, dass die eingehende Telefonnummer nicht im Adressbuch der zweiten Vorrichtung (200) vorhanden ist und der öffentliche Schlüssel im Adressbuch der zweiten Vorrichtung (200) vorhanden ist, Erzeugen, durch die zweite Vorrichtung (200), einer neuen Nachrichtenbox für Nachrichten von dem identifizierten Sender.

10. Verfahren nach einem der Ansprüche 1 bis 9, ferner umfassend:
durch die zweite Vorrichtung (200), basierend auf dem Empfangen der eingehenden Telefonnummer, des öffentlichen Schlüssels und des Anruferidentifikationscodes, Übertragen eines öffentlichen Schlüssels der zweiten Vorrichtung (200) an die erste Vorrichtung (100); und
durch die erste Vorrichtung (100), basierend darauf, dass der empfangene öffentliche Schlüssel nicht mit einem öffentlichen Schlüssel der zweiten Vorrichtung (200) übereinstimmt, der in einem Adressbuch der ersten Vorrichtung (100) gespeichert ist, Anzeigen einer Benachrichtigung über eine Möglichkeit, dass sich eine Telefonnummer der zweiten Vorrichtung (200) geändert hat.

11. System zum Senden und Empfangen eines Mobiltelefonanrufs, wobei das System Folgendes umfasst:
eine erste Vorrichtung (100), die konfiguriert ist, um einen öffentlichen Schlüssel und einen privaten Schlüssel zu erzeugen, Anruferdaten durch Hashing einer Telefonnummer zu erzeugen, von der aus der Mobiltelefonanruf gesendet werden soll, einen Anruferidentifikationscode durch Verschlüsseln der Anruferdaten unter Verwendung des privaten Schlüssels zu erzeugen und beim Senden des Mobiltelefonanrufs den Anruferidentifikationscode und den öffentlichen Schlüssel an eine zweite Vorrichtung (200) zu übertragen; und
die zweite Vorrichtung (200), die konfiguriert ist, um, basierend darauf, dass der empfangene öffentliche Schlüssel in einem Adressbuch der zweiten Vorrichtung (200) vorhanden ist, die Anruferdaten durch Entschlüsseln des empfangenen Anruferidentifikationscodes unter Verwendung des öffentlichen Schlüssels zu erlangen, eine eingehende Telefonnummer zu hashen und einen Sender des Mobiltelefonanrufs durch Vergleichen der gehashten eingehenden Telefonnummer mit den erlangten Anruferdaten zu identifizieren.

12. System nach Anspruch 11, wobei die Telefonnummer, von der aus der Mobiltelefonanruf gesendet werden soll, eine Telefonnummer ist, die einer Karte eines Teilnehmeridentitätsmoduls (SIM) entspricht, die aus einer Vielzahl von SIM-Karten ausgewählt ist, die von der ersten Vorrichtung (100) verwendet wird.

13. System nach einem der Ansprüche 11 bis 12, wobei die zweite Vorrichtung (200) ferner konfiguriert ist, um zu bestimmen, ob die eingehende Telefonnummer im Adressbuch der zweiten Vorrichtung (200) vorhanden ist.

14. System nach einem der Ansprüche 11 bis 13, wobei die zweite Vorrichtung (200) ferner konfiguriert ist, um basierend darauf, dass die eingehende Telefonnummer nicht im Adressbuch der zweiten Vorrichtung (200) vorhanden ist und die gehashte eingehende Telefonnummer und die erlangten Anruferdaten miteinander übereinstimmen, einen Benutzer, der dem öffentlichen Schlüssel entspricht, der im Adressbuch der zweiten Vorrichtung (200) gespeichert ist, als Sender des Mobiltelefonanrufs zu identifizieren und den identifizierten Sender anzuzeigen.

15. System nach einem der Ansprüche 11 bis 14, wobei die zweite Vorrichtung (200) ferner konfiguriert ist, um, basierend auf dem Empfangen der eingehenden Telefonnummer, des öffentlichen Schlüssels und des Anruferidentifikationscodes, einen öffentlichen Schlüssel der zweiten Vorrichtung (200) an die erste Vorrichtung (100) zu übertragen, und
die erste Vorrichtung (100) ferner konfiguriert ist, um, basierend darauf, dass der empfangene öffentliche Schlüssel der zweiten Vorrichtung (200) nicht mit einem öffentlichen Schlüssel der zweiten Vorrichtung (200) übereinstimmt, der in einem Adressbuch der ersten Vorrichtung (100) gespeichert ist, eine Benachrichtigung über eine Möglichkeit, dass sich eine Telefonnummer der zweiten Vorrichtung (200) geändert hat, anzuzeigen.

## Revendications

1. Procédé d'envoi et de réception d'un appel téléphonique mobile, le procédé comprenant :
générer, à l'aide d'un premier dispositif (100), une clé publique et une clé privée, et générer des données d'appelant par hachage d'un numéro de téléphone à partir duquel l'appel téléphonique mobile doit être envoyé ;
générer, à l'aide du premier dispositif (100), un code représentatif d'appelant en chiffrant les données d'appelant à l'aide de la clé privée ;
lors de l'envoi de l'appel téléphonique mobile, transmettre, depuis le premier dispositif (100), le code représentatif d'appelant et la clé publique à un deuxième dispositif (200) ;
en se basant sur l'existence de la clé publique reçue dans un carnet d'adresses du deuxième dispositif (200), obtenir, par le deuxième dispositif (200), des données d'appelant en déchiffrant le code représentatif d'appelant reçu à l'aide de la clé publique ;
hacher, par le deuxième dispositif (200), un numéro de téléphone entrant ; et
identifier, à l'aide du deuxième dispositif (200), un expéditeur de l'appel téléphonique mobile en comparant le numéro de téléphone entrant haché avec les données d'appelant obtenues.

2. Procédé selon la revendication 1, dans lequel le numéro de téléphone à partir duquel l'appel téléphonique mobile doit être envoyé est un numéro de téléphone correspondant à une carte de module d'identité d'abonné (SIM) choisie parmi une pluralité de cartes SIM utilisées par le premier dispositif (100).

3. Procédé selon l'une quelconque des revendications 1 à 2, comprenant en outre la détermination, par le deuxième dispositif (200), de l'existence ou non du numéro de téléphone entrant dans le carnet d'adresses du deuxième dispositif (200).

4. Procédé selon l'une quelconque des revendications 1 à 3, comprenant en outre, en réponse à la réception du numéro de téléphone entrant, de la clé publique et du code représentatif d'appelant, en se basant sur l'existence du numéro de téléphone entrant dans le carnet d'adresses du deuxième dispositif (200), l'identification, par le deuxième dispositif (200), d'un utilisateur correspondant au numéro de téléphone entrant et enregistré dans le carnet d'adresses du deuxième dispositif (200), en tant qu'expéditeur de l'appel téléphonique mobile.

5. Procédé selon l'une quelconque des revendications 1 à 4, comprenant en outre, en se basant sur l'existence du numéro de téléphone entrant dans le carnet d'adresses du deuxième dispositif (200) et sur la non-existence de la clé publique dans le carnet d'adresses du deuxième dispositif (200), l'affichage, par le deuxième dispositif (200), d'un message de notification.

6. Procédé selon l'une quelconque des revendications 1 à 3, comprenant en outre, en se basant sur l'existence du numéro de téléphone entrant dans le carnet d'adresses du deuxième dispositif (200) et sur la non-existence de la clé publique dans le carnet d'adresses du deuxième dispositif (200), l'affichage, par le deuxième dispositif (200), du numéro de téléphone entrant en tant qu'expéditeur, sans identifier, en tant qu'expéditeur de l'appel téléphonique mobile, un utilisateur correspondant au numéro de téléphone entrant qui est stocké dans le carnet d'adresses du deuxième dispositif (200).

7. Procédé selon l'une quelconque des revendications 1 à 3, comprenant en outre, en se basant sur l'existence du numéro de téléphone entrant dans le carnet d'adresses du deuxième dispositif (200), et la correspondance entre le numéro de téléphone entrant haché et les données d'appelant obtenues, l'identification, par le deuxième dispositif (200), en tant qu'expéditeur de l'appel téléphonique mobile, d'un utilisateur correspondant à la clé publique qui est stockée dans le carnet d'adresses du second dispositif (200), et l'affichage de l'expéditeur identifié.

8. Procédé selon la revendication 7, comprenant en outre la mise à jour, par le deuxième dispositif (200), du carnet d'adresses du deuxième dispositif (200), en ajoutant le numéro de téléphone entrant en tant que numéro de téléphone de l'utilisateur correspondant à la clé publique stockée dans le carnet d'adresses du deuxième dispositif (200).

9. Procédé selon l'une quelconque des revendications 1 à 3, comprenant en outre, en se basant sur la non-existence du numéro de téléphone entrant dans le carnet d'adresses du deuxième dispositif (200) et sur l'existence de la clé publique dans le carnet d'adresses du deuxième dispositif (200), la génération, par le deuxième dispositif (200), d'une nouvelle boîte de messages pour les messages provenant de l'expéditeur identifié.

10. Procédé de l'une des revendications 1 à 9, comprenant en outre :
par le deuxième dispositif (200), en se basant sur la réception du numéro de téléphone entrant, de la clé publique et du code représentatif d'appelant, transmettre une clé publique du deuxième dispositif (200) au premier dispositif (100) ; et
par le premier dispositif (100), sur la base de la non-correspondance entre la clé publique reçue et une clé publique du deuxième dispositif (200) qui est stockée dans un carnet d'adresses du premier dispositif (100), afficher une notification d'une possibilité que le numéro de téléphone du deuxième dispositif (200) ait été modifié.

11. Système permettant d'envoyer et de recevoir un appel téléphonique mobile, le système comprenant :
un premier dispositif (200) configuré pour générer une clé publique et une clé privée, générer des données d'appelant par hachage d'un numéro de téléphone à partir duquel l'appel téléphonique mobile doit être envoyé, générer un code représentatif d'appelant en chiffrant les données d'appelant à l'aide de la clé privée, et, lors de l'envoi de l'appel téléphonique mobile, transmettre le code représentatif d'appelant et la clé publique à un deuxième dispositif (200) ; et
le deuxième dispositif (200), configuré pour, en se basant sur l'existence de la clé publique reçue dans un carnet d'adresses du deuxième dispositif (200), obtenir les données d'appelant en déchiffrant le code représentatif d'appelant reçu à l'aide de la clé publique, hacher un numéro de téléphone entrant, et identifier un expéditeur de l'appel mobile en comparant le numéro de téléphone entrant haché aux données d'appelant obtenues.

12. Système selon la revendication 11, dans lequel le numéro de téléphone à partir duquel l'appel téléphonique mobile doit être envoyé est un numéro de téléphone correspondant à une carte de module d'identité d'abonné (SIM) choisie parmi une pluralité de cartes SIM utilisées par le premier dispositif (100).

13. Système selon l'une quelconque des revendications 11 à 12, dans lequel le deuxième dispositif (200) est en outre configuré pour déterminer si le numéro de téléphone entrant existe dans le carnet d'adresses du deuxième dispositif (200).

14. Système selon l'une quelconque des revendications 11 à 13, dans lequel le deuxième dispositif (200) est en outre configuré pour, en se basant sur l'existence du numéro de téléphone entrant dans le carnet d'adresses du deuxième dispositif (200), et la correspondance entre le numéro de téléphone entrant haché et les données d'appelant obtenues, identifier, en tant qu'expéditeur de l'appel téléphonique mobile, d'un utilisateur correspondant à la clé publique qui est stockée dans le carnet d'adresses du second dispositif (200), et afficher l'expéditeur identifié.

15. Système selon l'une quelconque des revendications 11 à 14, dans lequel le deuxième dispositif (200) est en outre configuré pour, en se basant sur la réception du numéro de téléphone entrant, de la clé publique et du code représentatif d'appelant, transmettre une clé publique du deuxième dispositif (200) au premier dispositif (100), et
le premier dispositif (100) est en outre configuré pour, sur la base de la non-correspondance entre la clé publique reçue du deuxième dispositif (200) et une clé publique du deuxième dispositif (200) qui est stockée dans un carnet d'adresses du premier dispositif (100), afficher une notification d'une possibilité que le numéro de téléphone du deuxième dispositif (200) ait été modifié.
